(19) Europäisches Patentamt
European Patent Office
Office européen des brevets

(11) **EP 1 470 501 B1**

(12) **FASCICULE DE BREVET EUROPEEN**

(45) Date de publication et mention
de la délivrance du brevet:
**11.03.2015 Bulletin 2015/11**

(21) Numéro de dépôt: **03709876.1**

(22) Date de dépôt: **13.01.2003**

(51) Int Cl.:
***G06F 17/30*** (2006.01)

(86) Numéro de dépôt international:
**PCT/FR2003/000089**

(87) Numéro de publication internationale:
**WO 2003/057648 (17.07.2003 Gazette 2003/29)**

(54) **PROCEDES ET SYSTEMES DE RECHERCHE ET D'ASSOCIATION DE RESSOURCES D'INFORMATION TELLES QUE DES PAGES WEB**

VERFAHREN UND SYSTEME ZUM SUCHEN UND VERKNÜPFEN VON INFORMATIONSQUELLEN WIE WEB-SEITEN

METHODS AND SYSTEMS FOR SEARCHING AND ASSOCIATING INFORMATION RESOURCES SUCH AS WEB PAGES

(84) Etats contractants désignés:
**AT BE BG CH CY CZ DE DK EE ES FI FR GB GR HU IE IT LI LU MC NL PT SE SI SK TR**

(30) Priorité: **11.01.2002 FR 0200341**
**07.05.2002 FR 0205751**

(43) Date de publication de la demande:
**27.10.2004 Bulletin 2004/44**

(73) Titulaire: **Maim, Enrico**
**75012 Paris (FR)**

(72) Inventeur: **Maim, Enrico**
**75012 Paris (FR)**

(74) Mandataire: **Le Forestier, Eric et al**
**LE FORESTIER CONSEIL**
**22, rue du Plateau Saint-Antoine**
**78150 Le Chesnay (FR)**

(56) Documents cités:
- KAREN BLAKEMAN: "Review of Alexa" TALES FROM THE TERMINAL ROOM, [Online] no. 2, septembre 1999 (1999-09), pages 1-6, XP002465223 ISSN: 1467-338X Extrait de l'Internet: URL:http://www.rba.co.uk/tfttr/archives/19 99/sept1999.shtml> [extrait le 2007-11-28]
- RUCKER J ET AL: "SITESEER: PERSONALIZED NAVIGATION FOR THE WEB. BOOKMARKS CAN BE A KEY COMPONENT FOR GATHERING PREFERENTIAL INFORMATION" COMMUNICATIONS OF THE ASSOCIATION FOR COMPUTING MACHINERY, ACM, NEW YORK, NY, US, vol. 40, no. 3, 1 mars 1997 (1997-03-01), pages 73-75, XP000689873 ISSN: 0001-0782
- DEAN J ET AL: "Finding related pages in the World Wide Web" COMPUTER NETWORKS, ELSEVIER SCIENCE PUBLISHERS B.V., AMSTERDAM, NL, vol. 31, no. 11-16, 17 mai 1999 (1999-05-17), pages 1467-1479, XP004304567 ISSN: 1389-1286
- RHODES B J ET AL: "JUST-IN-TIME INFORMATION RETRIEVAL AGENTS" IBM SYSTEMS JOURNAL, IBM CORP. ARMONK, NEW YORK, US, vol. 39, no. 3/4, 2000, pages 685-704, XP001116098 ISSN: 0018-8670
- DEAN J ET AL: "Finding related pages in the World Wide Web" COMPUTER NETWORKS, ELSEVIER SCIENCE PUBLISHERS B.V., AMSTERDAM, NL, vol. 31, no. 11-16, 17 mai 1999 (1999-05-17), pages 1467-1479, XP004304567 ISSN: 1389-1286

**(Cont. page suivante)**

• PIROLLI P ET AL: "SILK FROM A SOW'S EAR: EXTRACTING USABLE STRUCTURES FROM THE WEB" COMMON GROUND. CHI '96 CONFERENCE PROCEEDINGS. CONFERENCE ON HUMAN FACTORS IN COMPUTING SYSTEMS. VANCOUVER, APRIL 13 - 18, 1996, CONFERENCE ON HUMAN FACTORS IN COMPUTING SYSTEMS, NEW YORK, ACM, US, 13 avril 1996 (1996-04-13), pages 118-125, XP000657810 ISBN: 0-201-94687-4

• BICHTELER J ET AL: "THE COMBINED USE OF BIBLIOGRAPHIC COUPLING AND COCITATION FOR DOCUMENT RETRIEVAL" JOURNAL OF THE AMERICAN SOCIETY FOR INFORMATION SCIENCE, AMERICAN SOCIETY FOR INFORMATION. WASHINGTON, US, vol. 31, no. 4, 1 juillet 1980 (1980-07-01), pages 278-282, XP002043307 ISSN: 0002-8231

**Description**

La présente invention concerne d'une façon général des procédés et systèmes de gestion de ressources telles que des pages Web accessibles par l'Internet, ou tous autres types de documents, visant d'une part à améliorer l'obtention de ressources « proches » de ressources données, en termes notamment de centres d'intérêts pour l'utilisateur, et visant d'autre part à permettre à l'utilisateur, d'une manière particulièrement simple et intuitive, d'effectuer lui-même des associations entre ressources, notamment pour en tirer parti lors de l'obtention de ressources proches.

L'état de la technique

La quantité d'information potentiellement pertinente pour chaque individu devient telle que les méthodes actuelles de mémorisation et de recherche d'information ne sont guères suffisantes. A côté des systèmes permettant de retrouver une information rangée explicitement (tels que les « liens favoris ») ou par mots-clé (via un moteur de recherche), on souhaiterait avoir à disposition un procédé qui spontanément propose des informations pertinentes en fonction du contexte.

On connaît les systèmes qui fournissent des liens pertinents (ou plutôt « related links » en terminologie anglo-saxonne) par rapport à une page courante visitée sur le Web. Typiquement ces systèmes comprennent une extension au navigateur Internet qui communique avec un serveur distant qui fournit les liens pertinents en fonction de la page courante présentée dans la fenêtre principale du navigateur. Typiquement ces liens sont présentés, sous la forme d'une liste d'URL, dans une fenêtre adjacente à la fenêtre principale du navigateur. le document "Finding relates pages in the World Wide Web", Dean J. et al. Computer Networks, vol. 31, no. 11 - 16, May 17, 1999, pages 1467 - 1479, XP004304567 décrit un exemple d'un tel système.

On connait également par "Silk from a Sow's Ear: Extracting Usable Structures from the WEB", Pirolli P; et al. CHI '96 Conference on Human Factors in' Computing Systems, Vancouver, April 13-18,1996, pages 118-125, XP 000 657 810, l'utilisation de structures associatives de liens notamment pour prouver des pages web proches de pages données.

Cependant de tels systèmes ne sont pas étendus pour servir de mémoire associative.

Résumé de l'invention

Un objet de la présente invention est de proposer des procédés et systèmes informatiques de recherche de ressources (notamment pages Web, documents informatiques divers) « proches » de ressources données (cette notion de proximité étant explicitée plus loin), ainsi que des procédés de gestion associative de ressources.

En particulier, l'invention vise à caractériser des éléments d'information par rapport à de nouvelles pages qui apparaissent sur le Web, ouvrant ainsi la voie à de multiples nouvelles applications de gestion dynamique de contenu par rapport au contexte de navigation de l'utilisateur.

Plus précisément, l'invention vise à ce qu'à chaque élément d'information soient associés des liens sur des pages Web pertinentes qui le caractérisent et qui sont automatiquement tenus à jour. On peut ainsi caractériser des informations non textuelles, comme les photos, les sons et les animations (en Flash, etc.) et sélectionner dynamiquement les éléments à présenter à l'utilisateur en fonction du contexte de sa navigation qui est également caractérisée par des ensembles de pages Web pertinentes. Cette approche convient notamment, mais non exclusivement, aux magazines dans l'art de vivre, la mode et dans tous les autres domaines "de goûts" où il est difficile de caractériser par des mots-clé l'intérêt qu'un abonné porte à l'information (quand par exemple elle représente une musique, un objet d'art, un plat culinaire, etc.).

Un autre objet de l'invention est d'associer à des éléments d'informations d'autres éléments ciblés, tels que des publicités ciblées, en échange d'un service innovant de mémoire associative offert aux internautes.

En particulier, on vise à ce que, typiquement au moyen d'une extension de leur navigateur (extension téléchargeable à partir d'un site Web donné), les utilisateurs puissent utiliser les éléments d'information de ce site comme « mémoire associative ». Ainsi, pendant la navigation de l'utilisateur, l'élément le plus pertinent du site par rapport à la page Web visitée - ainsi que par rapport au contexte de navigation - lui sera spontanément présenté; l'utilisateur pourra alors glisser-déposer sur cet élément n' importe quelle ressource de son ordinateur, telle que l'icône d'un fichier du poste client, ou encore l'URL d'une page Web, pour la mémoriser. Ensuite, à chaque fois qu'il va visiter une page Web quelconque mais pertinente par rapport à cet élément, la ressource qu'il avait mémorisée lui sera spontanément présentée, avec en plus les ressources (telles que des publicités) que l'auteur de l'élément avait lui-même associé à l'élément. Les publicités présentées correspondront ainsi aux centres d'intérêt courants de l'utilisateur et sont fournies en échange d'un nouveau service de mémoire associative.

L'invention vise par ailleurs à mettre à profit les interfaces utilisateurs modernes pour créer, d'une manière particulièrement simple et intuitive, des associations entre ressources d'informations (pages Web, ou fichiers de documents) notamment dans le cadre des objectifs ci-dessus.

L'invention propose ainsi un procédé tel que défini dans la revendication 1.

Ce procédé présente les aspects préférés mais facultatifs tel que défini dans les revendications dépendantes.

Brève description des dessins

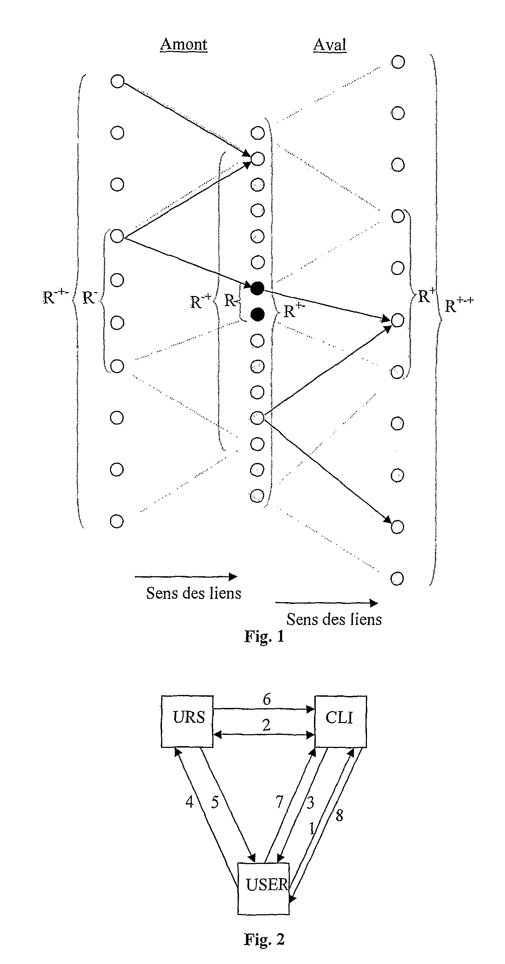

Les figures 1 à 7 des dessins annexés illustrent différentes étapes mises en oeuvre dans la présente invention.

Description détaillée de formes de réalisation préférées

*Lexique*

Ressource (ou élément): Ressource d'information telle qu'une page Web, une partie de page Web, un document, ou encore un élément XML. Chaque ressource peut elle-même être constituée de ressources, formant ainsi une structure arborescente.

Ressource courante: Ressource accédée par l'utilisateur au moment courant lors d'une navigation (c'est notamment la page Web visualisée dans la fenêtre principale du navigateur).

URI (Uniform Ressource Identifier) : Adresse de ressource. Sera parfois utilisé comme synonyme de URL (universal ressource locator).

Lien : URI placé dans une ressource. En général, en cliquant sur un lien, l'utilisateur peut accéder à la ressource pointée par lui.

Citer (Une première ressource cite une deuxième ressource) : La première ressource possède un lien vers la deuxième ressource.

Populaire : Se dit d'une ressource qui est accédée par un grand nombre d'utilisateurs (par exemple sur le Web) à partir de son URI.

Ressource privée : Ressource qui n'est pas accessible par un grand nombre d'utilisateurs (notamment qui n'est pas publiée sur le Web ou qui n'est pas largement connu).

Mémorisation associative : Ajout d'un lien vers une première ressource, sur une deuxième ressource, afin de pouvoir retrouver la première ressource par le procédé de recherche associative.

Recherche associative : Afin de retrouver une première ressource, accéder à une ressource pertinente par rapport à une deuxième ressource sur laquelle un lien sur la première ressource a été ajouté.

Lien ajouté : URI inséré par l'utilisateur dans un ensemble de liens associés.

Spot proposé : Spot présenté par le système en priorité car comportant les liens associés les plus pertinents par rapport au contexte courant.

Spot: Un spot est composé:

- d'un ensemble de liens, en général associés à une ressource de référence. Les ressources pointées par les liens associés sont accessibles (par exemple sur le Web) à partir de leur URI respectifs. Les liens associés sont composés de liens associés donnés et de liens associés complétés,

- et (optionnellement) d'un ou plusieurs ensemble de lien(s) (en particulier liens ajoutés par le créateur du spot et liens ajoutés par des utilisateurs du spot), proposé(s) à l'utilisateur dans le cadre du procédé de recherche associative,

- et (optionnellement) d'un lien vers ladite ressource de référence, lesdits liens associés étant sélectionnés comme étant pertinents par rapport à cette ressource de référence,

Domaine de pertinence d'un spot : Ensemble des ressources désignées par les liens associés de ce spot.

Liens associés donnés: Liens associés spécifiés explicitement (par celui qui crée ou qui publie la ressource à laquelle ledit ensemble est associé, ou encore par celui qui crée un spot pour cette ressource).

Liens associés complétés: Liens associés déterminés automatiquement (notamment au moyen d'un algorithme de distillation relative décrit dans la présente description).

Score de lien associé: Score de pertinence par rapport à l'ensemble des liens associés donnés. Ce score peut être calculé par un algorithme de distillation relative tel que l'un de ceux décrits dans la présente description.

Score autorité : Score de pertinence d'une ressource par rapport à un ensemble de liens associés donnés.

Score pivot : Score de pertinence d'un ressource citant d'autres ressources, représentant la pertinence des ressources citées par rapport à un ensemble de liens associés donnés.

Score non-contextuel : Score de pertinence ne dépendant pas du contexte.

Score contextuel : Score de pertinence dépendant du contexte.

Spot non-contextuel par rapport à une ressource (ou à un ensemble de ressources) en question: Spot dont les liens associés comprennent l'URI de la ressource en question (ou au moins certains des URI des ressources en question) avec un score (ou une moyenne de scores) supérieur(e) à un seuil donné ou qui est sélectionné de manière à le (ou la) maximiser (cf. la méthode de sélection de spot décrite dans la présente description).

Spot contextuel: Spot dont les liens associés sont les plus pertinents part rapport au contexte.

Contexte: Contexte de navigation.

Spotserver: Serveur sur l'Internet fournissant l'association entre lien associé et spot.

Spotserver courant : Spotserver auquel l'utilisateur est directement connecté.

Région pertinente d'une ressource : Partie d'une ressource contenant au moins un lien pertinent et ne contenant pas de lien non pertinent.

*Procédés de mémorisation et de recherche associatives*

[Vocabulaire utilisé :

première page = page mémorisée par l'utilisateur afin qu'il puisse la retrouver facilement ;

deuxième page = page utilisée par l'utilisateur comme support de mémorisation (pour mémoriser une association avec la première page, que l'on dénommera dans la suite par « pour mémoriser la première page » par souci de concision) ;

page courante = page présentée au moment courant dans la fenêtre principale du navigateur Internet.

Il s'agit par exemple de pages Web, toutefois la première page peut être une ressource privée telle qu'un document (document texte, multimédia ou autre) qui lui appartient].

Le système permet à l'utilisateur d'ajouter un lien vers une première page sur n'importe quelle deuxième page (ou au voisinage de la deuxième page ; on utilisera dans la suite l'expression « sur la deuxième page » par souci de concision).[1]

[1] L'étape consistant à ajouter ainsi un lien, sur une deuxième ressource, vers une première ressource (afin de pouvoir la retrouver par le procédé décrit dans ce rapport) est appelée mémorisation associative.

L'utilisateur accède aux pages au moyen d'un navigateur doté de l'extension propre au système (ou via un serveur Web intermédiaire). Ajouter un lien peut se faire par exemple par un glisser-déposer : l'utilisateur attrape une poignée représentant la première page et la dépose sur la deuxième page ; par exemple le lien ajouté est alors présenté par le système comme une vignette dans le style d'un « post-it » à l'endroit où il a été déposé, ou dans une fenêtre adjacente à la fenêtre principale du navigateur (ou dans un cadre adjacent au cadre présentant la page Web d'origine). Il peut aussi la déposer sur une icône représentant la deuxième page (par exemple dans ses liens favoris). Le système mémorise alors la relation avec l'utilisateur considéré, l'association entre le lien sur la première page et la deuxième page en question.

Ensuite, quand l'utilisateur accède à une page pertinente par rapport à la deuxième page (ou à la deuxième page elle-même), l'URI[2] de ce lien ajouté vers la première page lui est automatiquement présenté.

[2] Ainsi qu'optionnellement d'autres indications concernant le lien ajouté, tel que le texte ou l'objet graphique qui accompagne le lien ajouté, ou encore une présentation simplifiée ou miniaturisée de la première page elle-même.

Ainsi, pour retrouver la première page, l'utilisateur n'a qu'à accéder à une page quelconque[3] qui soit pertinente par rapport à la deuxième page.

[3] Ladite page quelconque est déjà ou devra être prise en compte par le système. L'utilisateur préférera ainsi choisir une page populaire pour accélérer la recherche. Le système est muni d'un crawler dont le but est justement de prendre en compte le plus possible de pages accessibles (notamment sur l'Internet) et qui intéressent l'utilisateur.

Plus simplement, dans la mesure où :

- l'utilisateur choisit ladite deuxième page parce qu'elle est pertinente par rapport à la première page

- et que la relation de pertinence est transitive à ce niveau,

pour retrouver la première page, l'utilisateur n'a qu'à accéder à n'importe quelle page (accessible par le système) qui soit pertinente par rapport à la première page : c'est le procédé de recherche associative.[4]

[4] Pour faciliter la lecture, on décrit ici le procédé de mémorisation/recherche associative en parlant de pages, mais le procédé s'applique plus largement à des ressources (pas seulement à des pages).

Noter que lors de l'étape de mémorisation associative l'utilisateur peut augmenter ses chances en ajoutant un lien vers la première page sur plusieurs deuxièmes pages.

Par ailleurs, dans la mesure où les relations de pertinence sont symétriques, les liens ajoutés sont implicitement bidirectionnels. En outre, dans le cas où la page courante est une ressource privée, le système peut l'assimiler à la (aux) deuxième(s) page(s) sur laquelle (sur lesquelles), le cas échéant, l'utilisateur avait ajouté un lien vers cette ressource privée, et présenter les autres premières pages qu'il avait également ajoutées sur cette (ces) deuxième(s) page(s).

L'étape de mémorisation associative peut être automatisée (ou être assistée par ordinateur). En effet, l'ajout d'un lien vers une première page sur une deuxième page peut être (semi-) automatisée selon les étapes suivantes :

I - déterminer des mots-clés ou des phrases principales de la première page (contenus dans la page ou associés à elle - par exemple délimités par des balises de type « meta-tag »),

II - fournir ces mots-clés ou phrases principales à un moteur de recherche qui retournera un ensemble de liens sur des pages contenant ces mots-clés,

III - en prendre au moins un sous-ensemble (par exemple les N meilleurs selon le moteur de recherche) pour les utiliser comme deuxièmes pages,

IV - ajouter un lien vers la première page sur ces deuxièmes pages.

Noter qu'en ce qui concerne l'étape I, diverses techniques d'extraction automatique des mots-clés ou des phrases principales d'un texte existent déjà.

On peut également extraire du texte les mots-clés, de la manière suivante :

- pour chaque mot, déterminer le score de ce mot en additionnant les scores des phrases dans lesquelles il se trouve et ensuite normaliser ces scores (par exemple en divisant chaque score ainsi obtenu par la racine carré de la somme des carrés de tous les scores ainsi obtenus) ;

- sélectionner les mots ayant les plus grands scores comme mots-clés.

Les deux procédés présentés ci-dessus peuvent être combinés en ne retenant des mots-clé sélectionnés que ceux qui se trouvent dans les phrases sélectionnées. Le procédé complet d'extraction des mots-clés du texte est alors comme suit :

- ôter du texte les mots non significatifs (appelés « stop words » dans la littérature) ;

- identifier les liens entre les phrases : une phrase est liée à une autre quand elle contient au moins un mot en commun ;

- appliquer la méthode de distillation absolue (décrite plus loin), ou une méthode équivalente exploitant un graphe de liens (telle que PageRank), sur les phrases ainsi liées entre elles, pour déterminer leurs scores ;

- pour chaque mot, déterminer le score de ce mot en additionnant les scores des phrases dans lesquelles il se trouve et normaliser;

- sélectionner les phrases ayant les plus grands scores comme étant les phrases principales du texte.

En variante, dans la mesure où (une ou) certaines phrases du texte peuvent être repérées comme étant prépondérantes, pour déterminer les scores des phrases, au lieu de la méthode de distillation absolue on peut utiliser la méthode de distillation relative (décrite plus loin) pour déterminer le score de pertinence des phrases par rapport auxdites phrases prépondérantes.

Par ailleurs, au lieu de phrases proprement dites, on peut considérer n'importe quelle sorte de parties ou unités de texte. Le procédé utilisant la distillation relative consiste ainsi à déterminer des scores de pertinence d' « unités de texte » (telles que des phrases) co-citées :

On identifie les unités de texte comprenant au moins un mot en commun avec l'unité (ou l'ensemble des unités) prépondérante(s), pour former un groupe d'unités de texte citantes. On crée (temporairement) un lien à partir de chaque unité de texte citante vers l'unité (ou l'ensemble des unités) de texte prépondérante(s).

On identifie les unités de texte contenant au moins un mot également contenu dans les unités de texte citantes, pour former un groupe d'unités de texte co-citées. On crée (temporairement) un lien à partir de chaque unité citante vers chaque unité co-citée avec laquelle ladite unité citante possède au moins un mot en commun.

On applique ensuite un des procédés de calcul de scores de pertinence par la méthode de distillation relative décrits plus loin. L'ensemble des identifiants des unités de texte pertinentes constitue les URI de la requête. [5]

[5] L'ensemble des identifiants des unités de texte citantes constitue l'ensemble $R^-$. L'ensemble des identifiants des unités de texte co-citées constitue l'ensemble $R^{-+}$, et ainsi de suite.

On va maintenant décrire la mise en oeuvre du système de recherche associative.

Pour présenter, à un utilisateur qui accède à une page courante, des liens sur des premières pages, le système effectue les étapes suivantes:

Etape a : déterminer le score de pertinence de deuxièmes pages candidates par rapport à la page courante,[6]

Etape b : sélectionner les (ou un certain nombre de) deuxièmes pages ayant (le cas échéant) un score de pertinence suffisant,

Etape c. présenter à l'utilisateur les (URI des) premières pages des liens qu'il avait ajouté sur les deuxièmes pages qui ont été sélectionnées à l'étape b; optionnellement lui présenter aussi les (URI des) deuxièmes pages elles-mêmes.[7]

[6] Cette étape est composée de l'étape a et/ou l'étape a' (voir plus loin...)

[7] Pour ce faire, comme déjà mentionné, le système possède en mémoire la relation entre utilisateur, deuxième page (sur laquelle l'utilisateur en question a ajouté des liens) et première page (lien ajouté par l'utilisateur en question sur la deuxième page en question). Ainsi le système peut tout d'abord déterminer l'ensemble des deuxièmes pages candidates pour l'utilisateur courant pour effectuer l'étape a, puis à l'étape c retrouver les liens ajoutés à présenter à l'utilisateur.

En variante, lors de la mémorisation associative, au lieu d'ajouter sur la deuxième page un lien vers la première page, l'utilisateur peut superposer à la deuxième page ou y insérer une annotation (ou n'importe quelle ressource telle qu'une icône ou autre objet graphique), qui joue alors le rôle de première page au sens du présent procédé. Dans ce cas, lors l'étape (c) de la recherche associative, le système présente la ou les deuxièmes pages qui ont été sélectionnées en présentant aussi leurs annotations (ou la ressource qui leur a été ajoutée).[8]

[8] Dans le reste de la description, par lien ajouté sur une deuxième page on entend que l'on inclut ce cas de figure où il y a une ressource ajoutée à la deuxième page.

Pour faciliter la lecture, on va considérer les 7 ensembles (voir la figure Fig. 1) suivants:

- $R$ est constitué par les pages[9] de la requête.

- $R^-$ est l'ensemble des pages qui contiennent un lien vers[10] au moins une page de la requête.

- $R^{-+}$ est l'ensemble des pages pointées (citées) par au moins une page de $R^-$.

- $R^{+-}$ est l'ensemble des pages qui citent au moins une page de $R^{-+}$ ($R^- \subset R^{+-}$).

- $R^+$ est l'ensemble des pages citées par au moins une page de la requête (R).

- $R^{+-}$ est l'ensemble des pages qui citent au moins une page de $R^+$.

- $R^{+-+}$ est l'ensemble des pages citées par au moins une page de $R^{+-}$ 1($R^+ \subset R^{+-+}$).

[9] (par « page » on entend « URI de page »)

[10] (autrement dit « qui citent », ou encore « qui pointent »)

Pour déterminer le score de pertinence des deuxièmes pages candidates par rapport à une page courante $R$ (entendre ici $R$ comme <u>ressource courante</u>[11]), le système met en oeuvre un procédé de « distillation relative » comprenant au moins l'une parmi les étapes a et a' suivantes.

[11] Car ici la requête est formée d'une seule page.

Etape a :

Etape a-1 : Identifier l'ensemble $R^-$ des pages qui possèdent au moins un lien vers $R$; [12]

Etape a-2 : Retrouver en mémoire l'ensemble des deuxièmes pages candidates pour l'utilisateur courant et effectuer l'intersection entre l'ensemble $R^{-+}$ des pages pointées par les pages de $R^-$ (noter que $R$ est dans l'ensemble $R^{-+}$) et l'ensemble des deuxièmes pages candidates pour l'utilisateur courant ;

Etape a-3 : Pour chaque page de l'ensemble résultant de l'étape a-2, calculer son score de pertinence (score autorité) par rapport à $R$. (Noter que cette étape inclut l'identification de l'ensemble des pages de $R^{-+-}$ possédant au moins un lien pointant vers au moins un sous-ensemble de l'ensemble résultant de l'étape a-2 -voir la section « Sélection des spots »).

[12] On peut utiliser un moteur de recherche sur le Web pour déterminer les ressources qui pointent vers une ressource donnée.

Etape a' :

Etape a'-1 : Identifier l'ensemble $R^+$ des pages pointées par $R$ ;

Etape a'-2 : Retrouver en mémoire l'ensemble des deuxièmes pages candidates pour l'utilisateur courant et effectuer l'intersection entre l'ensemble $R^{+-}$ des pages possédant au moins un lien vers une page de $R^+$ (noter que $R$ est dans l'ensemble $R^{+-}$) et l'ensemble des deuxièmes pages candidates pour l'utilisateur courant ;

Etape a'-3 : Pour chaque page de l'ensemble résultant de l'étape a'-2, calculer son score de pertinence (score pivot) par rapport à $R$. (Noter que cette étape inclut l'identification de l'ensemble des pages de $R^{+-+}$ pointées par au moins un sous-ensemble de l'ensemble résultant de l'étape a'-2).

Le calcul des scores de pertinence aux étapes a-3 et a'-3 peut s'effectuer au moyen notamment de l'une des équations présentées plus loin à la section « Sélection des spots » qui décrit par ailleurs des améliorations au procédé présenté ci-dessus. Notamment les scores sont affinés par itérations successives. Lors de ces itérations, les pages pivot dans l'étape a et les pages autorité dans l'étape a' acquièrent aussi des scores de pertinence (respectivement scores pivot et scores autorité). En plus des deuxièmes pages candidates (c'est-à-dire en plus des URI des pages de $R^{-+}$ dans l'étape a et/ou de $R^{+-}$ dans l'étape a') déterminées comme décrit ci-dessus, on peut alors aussi inclure, dans l'ensemble résultant fourni à l'étape b, les pages pivot de l'étape a et les pages autorité de l'étape a' (puisqu'elles ont maintenant des scores de pertinence). Par ailleurs les poids des liens entre pages proches[13] sont amoindris pour améliorer les résultats davantage.

[13] Pour identifier la proximités des pages aux extrémités des liens le système identifie en plus l'ensemble des pages R[7] des pages possédant au moins un lien vers les pages R⁻ et l'ensemble des pages R⁻⁺⁻ des pages possédant au moins un lien vers les pages R⁻⁺⁻ (voir la section « Filtrage »).

Le système peut donc sélectionner les deuxièmes pages les plus (ou suffisamment) pertinentes à l'étape b et effectuer l'étape c pour présenter à l'utilisateur leurs liens ajoutés.

Les résultats obtenus par le procédé de distillation relative peuvent être mémorisés (puis maintenus - voir plus loin la section « Maintenance des spots ») dans le but d'éviter de les recalculer lors des accès aux pages courantes déjà traitées. Ainsi, le système maintient, dans une deuxième mémoire, les scores des deuxièmes pages par rapport aux pages courantes dans les cas où ces scores sont supérieurs à un seuil donné. Pour une page courante déjà traitée, la réponse du système est alors quasi immédiate.

Autrement dit, l'étape a est modifiée comme suit :

Etape a' : consulter la deuxième mémoire pour savoir si les deuxièmes pages les plus pertinentes pour la page courante ont déjà été mémorisées (et si ces données en mémoire sont suffisamment fraîches), le cas échéant passer à l'étape c, sinon déterminer et mémoriser le score de pertinence de deuxièmes pages candidates par rapport à la page courante.

En variante, le système mémorise (puis maintient - voir plus loin la section « Maintenance des spots ») les données nécessaires sans attendre qu'un utilisateur accède à une page courante ; la mémorisation est déclenchée par l'utilisation, par l'utilisateur, d'une nouvelle deuxième page (comme support de mémorisation associative).

En exploitant le fait que les scores de pertinence sont réflexifs[14], le système part de chaque deuxième page pour construire $R^-$ et $R^{-+}$ (et $R^{-+-}$) et/ou $R^+$ et $R^{+-}$ (et $R^{+-+}$), calcule par distillation relative les scores de pertinence de toutes les pages courantes potentielles, et les mémorise dans une deuxième mémoire (c'est une mémoire inverse apte à fournir, pour chaque page courante potentielle, les deuxièmes pages pertinentes).

[14] (i.e. le score de pertinence d'une deuxième page par rapport à une page courante est égal au score de pertinence de cette page courante par rapport à cette deuxième page)

Par ailleurs, comme déjà indiqué, le système maintient une première mémoire contenant les liens ajoutés par utilisateur et deuxième page.[15]

[15] Noter que, avantageusement, les données dans la deuxième mémoire ne sont pas par utilisateur et peuvent ainsi servir à tous les utilisateurs.

Ainsi, quand un utilisateur accède réellement à une page courante, le système sélectionne dans la deuxième mémoire les deuxièmes pages - parmi les deuxièmes pages utilisées par cet utilisateur comme support de mémorisation[16] - qui ont les scores de pertinence les plus élevés par rapport à ladite page courante, puis retrouve (dans la première mémoire) les liens ajoutés par cet utilisateur sur ces deuxièmes pages.

[16] (celles-ci sont indiquées dans la première mémoire)

Autrement dit, le procédé comprend les étapes suivantes[17].

[17] Les étapes m1 et m2 décrivent le procédé de mémorisation associative, les étapes a, b et c décrivent le procédé de recherche associative.

Pour chaque nouvelle deuxième page $R$ (sur laquelle un utilisateur ajoute un lien)[18]:

Etape m1: Effectuer au moins l'une des étapes m1-1 et m1-1', puis effectuer l'étape m1-2 :

Etape m1-1 :

- identifier l'ensemble $R^-$ des pages qui possèdent au moins un lien vers R ;

- identifier l'ensemble $R^{-+}$ des pages courantes potentielles pointées par les pages de $R^-$;

- pour chaque page de $R^{-+}$ (sauf $R$) calculer son score de pertinence (score autorité - voir la section « Sélection des spots ») par rapport à $R$ ; noter que cette étape inclut l'identification de l'ensemble des pages $R^{-+-}$ possédant au moins un lien pointant sur au moins un sous-ensemble de $R^{-+}$ (voir la section « Sélection des spots »);

[18] L'étape m1 est effectuée seulement pour les nouvelles deuxièmes pages, tandis que l'étape m2 est effectuée chaque fois qu'une deuxième pages utilisée par un utilisateur, qu'elles soit nouvelle pour le système ou pas.

Etape m1-1':

- identifier l'ensemble $R^+$ des pages vers lesquelles R possède au moins un lien;

- identifier l'ensemble $R^{+-}$ des pages courantes potentielles pointant vers au moins une page de R+;

- pour chaque page de $R^{+-}$ (sauf $R$) calculer son score de pertinence (score pivot - voir la section « Sélection des spots ») par rapport à $R$ ; noter que cette étape inclut l'identification de l'ensemble des pages $R^{+-+}$ pointées par au moins un sous-ensemble des éléments de $R^{+-}$ ;

Etape m1-2 : mémoriser, dans une deuxième mémoire, les URI des pages ayant un score de pertinence suffisant par rapport à $R$, en relation avec $R$, de manière à ce qu'à partir de l'URI de chacune desdites pages ayant un score de pertinence suffisant par rapport à $R$ on puisse retrouver[19] (la deuxième page) $R$ ainsi que ledit score de pertinence suffisant;

[19] (ainsi que les autres deuxièmes pages, le cas échéant, pour lesquelles le score de pertinence de R est suffisant)

Etape m2 : (en parallèle avec l'étape m1) mémoriser dans une première mémoire, pour chaque utilisateur et chaque deuxième page, les liens ajoutés que ledit utilisateur a ajouté sur ladite deuxième page ;

Lors de l'accès à une page courante par un utilisateur :

(L'étape a n'est plus nécessaire puisque les scores sont déjà en mémoire).

Etape b-m : Sélectionner dans la deuxième mémoire un certain nombre de deuxièmes pages[20], parmi les deuxièmes pages utilisées par ledit utilisateur (indiqués dans la première mémoire), pour lesquelles les scores de pertinence de ladite page courante sont les plus élevés (s'ils existent);

[20] Normalement, dans la deuxième mémoire, les URI des deuxièmes pages pertinentes par rapport à une page courante potentielle sont déjà triés par score de pertinence.

Etape c (inchangée) : Retrouver dans la première mémoire les liens ajoutés par ledit utilisateur sur les deuxièmes pages sélectionnées à l'étape b-m et les présenter audit utilisateur (avec optionnellement les deuxième pages sur lesquelles ils ont été ajoutés et de manière triée).

On appliquera également les améliorations présentées plus loin à la section « Sélection des spots ». Notamment comme les scores sont affinés par itérations successives, les pages pivot dans l'étape m1-1 et les pages autorité dans l'étape m1-1' acquièrent aussi des scores de pertinence (respectivement scores pivot et scores autorité) et peuvent ainsi être inclus dans l'ensemble résultant fourni à l'étape ml-2 (en plus des URI des pages de $R^{-+}$ dans l'étape ml-1 et/ou de $R^{+-}$ dans l'étape m1-1'). Par ailleurs, ici aussi les poids des liens entre pages proches sont amoindris pour améliorer les résultats (voir la section « Filtrage »).

Avec ce dernier procédé, les liens ajoutés sont présentés quasi immédiatement par le système dans tous les cas, c'est-à-dire même quand une page courante est accédée par un utilisateur pour la première fois.

On avait mentionné que lors de l'étape de mémorisation associative l'utilisateur peut augmenter ses chances en ajoutant un lien vers la première page sur plusieurs deuxièmes pages. On va maintenant lui permettre de former des groupes de deuxièmes pages auxquelles est ajouté un lien vers la première page (l'idée étant que, comme la première page peut être intéressante par rapport à plus d'un centre d'intérêt de l'utilisateur, les groupes permettent de classer la première page par rapport à des centres d'intérêt distincts, chaque groupe correspondant à un centre d'intérêt différent).

Concrètement, chaque fois que l'utilisateur ajoute un lien (vers la première page) sur une nouvelle deuxième page, le ou les groupes de deuxièmes pages qu'il avait déjà formés le cas échéant pour la première page lui sont proposés par le système et il peut alors choisir un ou plusieurs de ces groupes dans lesquels insérer ladite nouvelle deuxième page, ou sinon il peut créer un nouveau groupe formé de la seule nouvelle deuxième page.

Il peut aussi par la même occasion manipuler ses groupes plus largement, comme par exemple supprimer une deuxième page d'un groupe, scinder un groupe en deux, fusionner deux groupes, supprimer un groupe, etc. Enfin, il peut aussi dupliquer un groupe pour y ajouter un lien sur une autre première page.

Chaque groupe est traité par le système comme une requête de distillation relative. De manière similaire au dernier procédé décrit[21], pour chaque requête $R$ (c'est-à-dire pour chaque groupe de deuxièmes pages) le système identifie et mémorise (puis maintient - voir plus loin la section « Maintenance des spots ») les pages courantes potentielles qui ont un score de pertinence suffisant, et forme ainsi une mémoire inverse apte à fournir, pour chaque page courante potentielle, les requêtes les plus pertinentes (c'est-à-dire les groupes les plus pertinents).

[21] La différence est qu'ici R représente une requête formée d'une ou plusieurs ressources alors qu'avant R représentait une seule ressource (une seule deuxième page).

Autrement dit, la mémorisation associative comprend les étapes suivantes :

(L'étape m1 est effectuée seulement pour les requêtes non déjà connus par le système ou pas suffisamment fraîches, tandis que l'étape m2 est effectuée pour toutes les requêtes des utilisateurs, qu'elles soient nouvelles pour le système ou pas).

Etape m1: Effectuer au moins l'une des étapes m1-1 et m1-1', puis effectuer l'étape m1-2 :

Etape ml-1 :

- identifier l'ensemble $R^-$ des pages qui possèdent au moins un lien vers une page de $R$ ;

- identifier l'ensemble $R^{-+}$ des pages (vues comme pages courantes potentielles) pointées par au moins une page de $R^-$ ;

- pour chaque page de $R^{-+}$ (sauf $R$) calculer son score de pertinence (score autorité - voir la section « Sélection des spots ») par rapport à R ; noter que cette étape inclut l'identification de l'ensemble des pages $R^{-+-}$ possédant au moins un lien pointant sur au moins un sous-ensemble de $R^{-+}$ (voir la section « Sélection des spots »);

Etape m1-1':

- identifier l'ensemble $R^+$ des pages vers lesquelles au moins une page de R possède un lien;

- identifier l'ensemble $R^{+-}$ des pages courantes potentielles pointant vers au moins une page de R⁺ ;

- pour chaque page de $R^{+-}$ (sauf R) calculer son score de pertinence (<u>score pivot</u>) par rapport à R ; noter que cette étape inclut l'identification de l'ensemble des pages $R^{+-+}$ pointées par au moins un sous-ensemble de $R^{+-}$ ;

Etape m1-2: mémoriser, dans une deuxième mémoire, les URI des pages ayant un score de pertinence suffisant par rapport à R, en relation avec R, de manière à ce qu'à partir de l'URI de chacune desdites pages ayant un score de pertinence suffisant par rapport à R on puisse retrouver[22] R ainsi que ledit score de pertinence suffisant;
[22] (parmi l'ensemble des requêtes mémorisées, le cas échéant, pour cette page)

Etape m2 : (en parallèle avec l'étape ml) mémoriser dans une première mémoire, pour chaque utilisateur et requête, les liens ajoutés (vers premières pages) ;
Lors de l'accès à une page courante par un utilisateur :

Etape b-m : Sélectionner dans la deuxième mémoire un certain nombre de requêtes, parmi les requêtes (groupes) utilisées par ledit utilisateur comme support de mémorisation associative (indiqués dans la première mémoire), pour lesquelles les scores de pertinence de ladite page courante sont les plus élevés (s'ils existent);

Etape c : Retrouver dans la première mémoire les liens ajoutés par ledit utilisateur sur les requêtes sélectionnées à l'étape b-m et les présenter audit utilisateur, avec optionnellement :

- les (ou un certain nombre des) requêtes sur lesquelles ils ont été ajoutés,

- ainsi qu'un certain nombre de (liens vers des) pages pertinentes ayant un score de pertinence estimé (à l'étape ml-2) suffisant par rapport auxdites requêtes sélectionnées à l'étape b-m.[23]

[23] Ces URI sont analogues aux « related links » mentionnés à la section « L'état de la technique », cependant ils sont plus pertinents car leurs scores de pertinence ont été calculés par rapport à la requête à laquelle ils sont associés par distillation relative.

On appliquera également les améliorations présentées plus loin à la section « Sélection des spots ». Notamment comme les scores sont affinés par itérations successives, les pages pivot dans l'étape m1-1 et les pages autorité dans l'étape m1-1' acquièrent aussi des scores de pertinence (respectivement scores pivot et scores autorité) et peuvent ainsi être inclus dans l'ensemble résultant fourni à l'étape ml-2 (en plus des URI des pages de $R^{-+}$ dans l'étape m1-1 et/ou de $R^{+-}$ dans l'étape m1-1'). Par ailleurs les poids des liens entre pages proches sont ici aussi amoindris pour améliorer les résultats (voir la section « Filtrage »).
A l'étape b-m, le système fournit un ensemble de requêtes sélectionnées. Il serait avantageux d'affiner la sélection de manière à présenter à l'utilisateur (la ou) les requêtes[24] qui soient les plus pertinentes par rapport au contexte de navigation de l'utilisateur. C'est ce que l'on va maintenant décrire.
[24] (avec les premières pages et les liens pertinents correspondants)
L'histoire de la navigation d'un utilisateur est modélisée à l'aide d'une « pile de contexte », où à chaque lien (pouvant être présenté à l'utilisateur) est associé un score de pertinence à chaque niveau de navigation, et quand un lien est inexistant on l'assimile à un lien dont le score est égal à zéro.
Quand l'utilisateur clique sur un lien et accède à une nouvelle page, le système ajoute un niveau à la pile de contexte. En revanche, quand il clique sur la commande « Back » de son navigateur le système dépile un niveau.
Pour un lien donné, le score contextuel est une moyenne des scores non contextuels[25] à chaque niveau de la pile de contexte, pondérés en fonction de la profondeur. Afin de ne pas avoir à recalculer tous les scores à chaque fois, on utilise une pondération exponentielle, ce qui fait que le score contextuel à un certain niveau est la moyenne pondérée du score non contextuel à ce niveau et du score contextuel au niveau précédent.
[25] (c'est-à-dire déterminés en ne tenant pas compte du contexte)
Autrement dit, pour un URI donné, s étant le score non contextuel au dernier niveau et r le score contextuel au niveau précédent, le score contextuel au dernier niveau est : lambda.r + (1 - lambda).s (lambda étant une pondération constante entre 0 et 1, en principe inférieure à ½ : plus lambda est grand, plus le passé a d'importance).
Parmi les requêtes (c'est-à-dire les groupes) sélectionnées à l'étape b-m, le système sélectionne celles qui sont les plus proches du contexte, c'est-à-dire celles pour lesquelles les scores des URI mémorisés à l'étape m1-2 sont les plus proches des scores contextuels pour l'utilisateur en question. Pour déterminer la proximité de chaque requête avec le contexte, le système calcule la somme des produits, pour chaque URI de la requête, du score (non-contextuel) de la requête avec le score contextuel pour l'utilisateur en question.

L'étape b-m est ainsi remplacée par l'étape b'-m suivante :

Etape b'-m : Sélectionner dans la deuxième mémoire un certain nombre de requêtes, parmi les requêtes (groupes) utilisées par ledit utilisateur comme support de mémorisation associative (indiqués dans la première mémoire), pour lesquelles les scores de pertinence de ladite page courante sont les plus élevés (s'ils existent) et pour lesquels les scores de pertinence des pages courantes potentielles sont les plus proches des scores de pertinence contextuels.

On va maintenant décrire un procédé, exploitant le système des cookies, pour reconnaître l'utilisateur quand il passe d'un site à l'autre, de manière à pouvoir maintenir sa pile de contexte.

Rappelons que le système des cookies permet aux serveurs de sites d'un domaine Internet (i.e. nom de domaine ou adresse IP) de reconnaître un utilisateur (c'est-à-dire son ordinateur) quand il accède à des pages Web appartenant à un même domaine Internet.

Le procédé que l'on décrit ici permet à un serveur, qui met en oeuvre notre procédé - on l'appellera serveur client (CLI) - de reconnaître même les utilisateurs qui naviguent d'un site à l'autre qui ne font pas partie d'un même domaine Internet, même d'ailleurs si dans leur navigation ces utilisateurs passent par des sites qui ne mettent pas en oeuvre notre procédé.

Pour ce faire, trois mécanismes de communication sont utilisés :

1- Chaque page Web d'un site d'un serveur client contient un cadre (frame) dont l'adresse est celui d'un serveur centralisé (URS) qui gère notre procédé de reconnaissance de l'utilisateur (USER) ;

2- Le serveur centralisé et chaque serveur client ont chacun un cookie mémorisé dans l'ordinateur de l'utilisateur (noter que le temps de création de ces cookies peut être utilisé pour estimer la fiabilité de reconnaissance de l'utilisateur) ;

3- Le serveur client communique avec le serveur centralisé directement.

Il y a trois cas possibles qui sont décrits ci après (voir figure 2).

Nouvel utilisateur pour le serveur client et pour le serveur centralisé :

1. L'utilisateur (l'ordinateur USER) ouvre une page du site client (serveur CLI) ; il n'y a pas de cookie CLI.

2. CLI demande à URS un identifiant libre pour USER et reçoit ID= "123456"

3. CLI renvoie à USER une page comprenant deux cadres

- Le premier cadre est à l'adresse http://URS.com/...?ID= "123456"

- Le deuxième cadre est à l'adresse http://CLI.com/...

4. USER envoie à URS la requête http pour demander le contenu du premier cadre (http://URS.com/...?ID= "123456") ; comme il n'y a pas de cookie appartenant à URS, URS conclut qu'il s'agit d'un nouvel utilisateur et lui attribue l'identifiant "123456".

5. URS répond et installe un cookie (contenant ID= "123456") chez USER

6. (en parallèle avec 5.) URS transmet [ID="123456" (pas de remplacement)] à CLI

7. (en parallèle avec 4.) USER envoie à CLI la requête http pour demander le contenu du deuxième cadre

8. (après réception de l'identifiant au point 6) CLI envoie à USER le contenu du cadre http://CLI.com/...

Nouvel utilisateur pour le serveur client mais pas pour le serveur centralisé :

1. USER ouvre une page du site client (serveur CLI) ; il n'y a pas de cookie CLI.

2. CLI demande à URS un identifiant libre pour USER et reçoit ID= "123456"

3. CLI renvoie à USER une page comprenant deux cadres

• Le premier cadre est à l'adresse http://URS.com/...?ID= "123456"

• Le deuxième cadre est à l'adresse http://CLI.com/...

4. USER envoie à URS la requête http pour demander le contenu du premier cadre (http://URS.com/...?ID= "123456) ainsi que le contenu du cookie (créé lors d'un accès précédent et comportant l'identifiant ID="ABCDEF")

5. URS répond

6. (en parallèle avec 5.) URS transmet [ID="ABCDEF" remplaçant ID=" 123456"] à CLI (+optionnellement des données supplémentaires propres à ID="ABCDEF")

7. (en parallèle avec 4.) USER envoie à CLI la requête http pour demander le contenu du deuxième cadre

8. (après réception de l'identifiant "ABCDEF" au point 6.) CLI envoie à USER le contenu du cadre http://CLI.com/... ainsi qu'un nouveau cookie comportant ID="ABCDEF" en remplacement du précédent

Utilisateur déjà connu du serveur centralisé et du serveur client :

1. USER ouvre une page du site client (serveur CLI) et transmet le contenu du cookie associé à CLI (ID="ABCDEF")

2. (cette étape n'est pas applicable)

3. CLI renvoie à USER une page comprenant deux cadres

• Le premier cadre est à l'adresse http://URS.com/...?ID= "ABCDEF"

• Le deuxième cadre est à l'adresse http://CLI.com/...

4. USER envoie à URS la requête http (http://URS.com/...?ID= "ABCDEF", pour demander le contenu du premier cadre) ainsi que le contenu du cookie (créé lors d'un accès précédent et comportant aussi ID="ABCDEF")

5. URS répond

6. (Optionnellement, CLI peut demander et/ou recevoir de URS des données supplémentaires pour ID="ABCDEF")

7. (en parallèle avec 4.) USER envoie à CLI la requête http pour demander le contenu du deuxième cadre

8. CLI envoie à USER le contenu du cadre http://CLI.com/... (le cas échéant après réception des données à l'étape 6.)

Le procédé décrit ci-dessus permet de sélectionner les liens à afficher dans les pages Web en fonction du contexte de navigation[26]. C'est ce qu'on va maintenant décrire.

[26] (ou, comme décrit plus haut, de sélectionner les requêtes elles-mêmes ; ceci étant trivial on ne le décrit pas à nouveau)

Partons de la situation où chaque requête (le serveur qui l'héberge) possède un ensemble d'URI initiaux ainsi que l'ensemble des liens qui pourraient être proposés à l'utilisateur avec leurs scores par défaut : les scores non contextuels.

Comme déjà décrit, le score contextuel est une moyenne des scores non contextuels à chaque niveau de la pile de contexte, pondérés en fonction de la profondeur. Ainsi, $r_i$ étant le score non contextuel au dernier niveau et $\tilde{r}_i$ le score contextuel au niveau précédent, sa valeur après avoir suivi un lien est : $\tilde{r}_i \mapsto \lambda\tilde{r}_i + \bar{\lambda}r_i$ [27] [27]

[27] Ce qui donne $\tilde{r}_i = \bar{\lambda}\sum_{n=0}^{d-1}\lambda^n r_{i,n} + \lambda^d r_{i,d}$ avec $d$ la profondeur de la racine et $r_{i;n}$ le score de la page $P_i$ à la profondeur $n$.

Les liens présentés à l'utilisateur sont ceux qui ont le plus grand score contextuel.

La pile de contexte peut être affichée dans le cadre URS (le premier cadre) introduit plus haut. Ainsi l'utilisateur peut voir quelles sont les pages qui sont intervenues dans le calcul des pages à afficher. Il peut cliquer des éléments de la pile pour remonter des niveaux, et un bouton « Erase » permet de vider la pile de contexte.

La pile de contexte est stockée, pour chaque utilisateur, dans le serveur centralisé (URS), avec l'identifiant de l'utilisateur. Ainsi, chaque fois qu'un utilisateur ouvre une page chez un serveur client (CLI), celui-ci, ayant obtenu l'identifiant de l'utilisateur, va donner à URS les scores non contextuels[28], lequel répondra avec les scores contextuel après avoir effectué la moyenne pondérée décrite plus haut[29]. Le serveur du site client pourra alors afficher dans la page les liens qui ont le meilleur score.

[28] Pour éviter du trafic inutile on peut sélectionner les pages à envoyer en ne prenant que celles qui ont un score supérieur à un certain seuil, par exemple la moitié du seuil exigé pour qu'une page soit affichée à l'utilisateur

[29] Ceci s'effectue dans le cadre de l'étape 6 décrit plus haut.

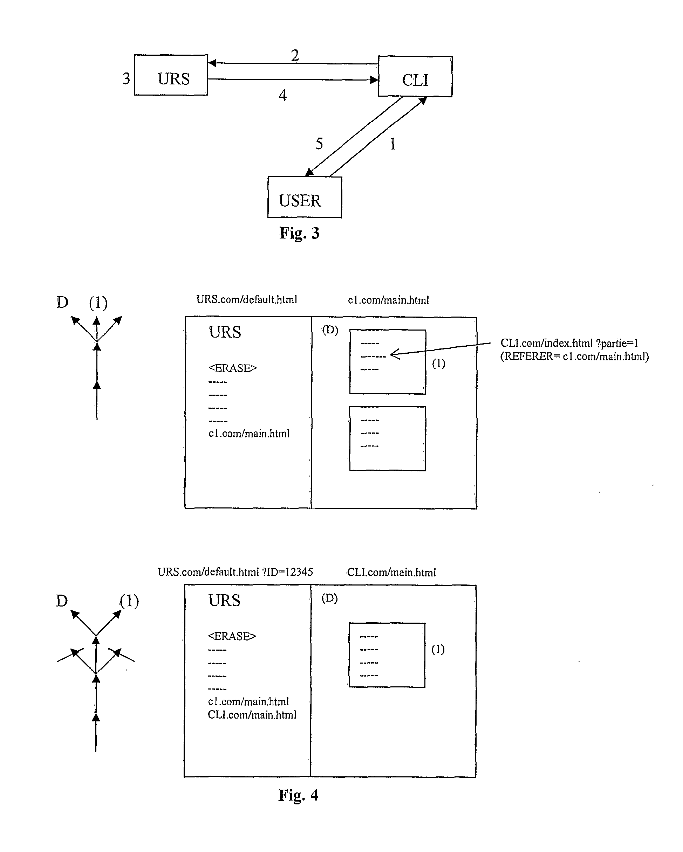

Les étapes sont ainsi les suivantes (voir figure 3):

1. L'utilisateur (USER) envoie une requête http pour ouvrir une page

2. Le serveur client (CLI) transmet au serveur centralisé (URS) les scores non contextuels de la page en question et l'identifiant de l'utilisateur

3. URS ajoute un niveau au contexte et calcule les scores contextuels

4. Les scores contextuels (du moins les meilleurs d'entre eux) sont retournés au serveur client

5. Le serveur client sélectionne les liens qui ont le meilleur score et les présente à l'utilisateur.

Il peut être intéressant d'une part de grouper les liens dans différentes parties des pages, voire même de hiérarchiser les parties, c'est-à-dire de permettre à des parties de contenir des sous-parties, en plus de liens. Voici les changements que cela implique :

- Le contexte courant[30] doit contenir des informations de contexte pour chaque partie de la page affichée, donc lorsque la page envoie ses scores non contextuels, elle en envoie autant qu'il y a de parties, et URS lui répond avec un contexte pour chaque partie. Pour éviter certains problèmes (voir points suivants) il faut également un contexte par défaut, qui représente la page elle-même et ses parties et qui cumule tous les scores de tous les liens

- Lorsque l'utilisateur clique sur un lien, il faut que le contexte de la partie qui contient ce lien soit utilisé comme contexte de dernier niveau (i.e. ce contexte-là sera utilisé pour le calcul des scores aux niveaux suivants). Un moyen d'obtenir ce résultat est de mettre dans les adresses des liens un argument qui contient un identifiant (unique pour la page) de la partie, identifiant qui est également transmis à URS avec les scores non-contextuels.

- Dans la mise en oeuvre du procédé décrit ici, il faut faire attention à ne pas confondre les parties de différentes pages, par exemple si l'utilisateur a ouvert plusieurs fenêtres de son navigateur et clique dans une fenêtre après avoir cliqué dans une autre (URS ne stocke qu'une pile de contexte). Ceci peut se faire en comparant le champ HTTP Referer avec l'adresse du dernier niveau de la pile et ne tenir compte du numéro de partie qu'en cas d'égalité. Dans les autres cas (également si l'utilisateur est passé par une page d'un site non client) on prend le contexte par défaut.

[30] C'est-à-dire l'ensemble des scores contextuels des liens au niveau courant.

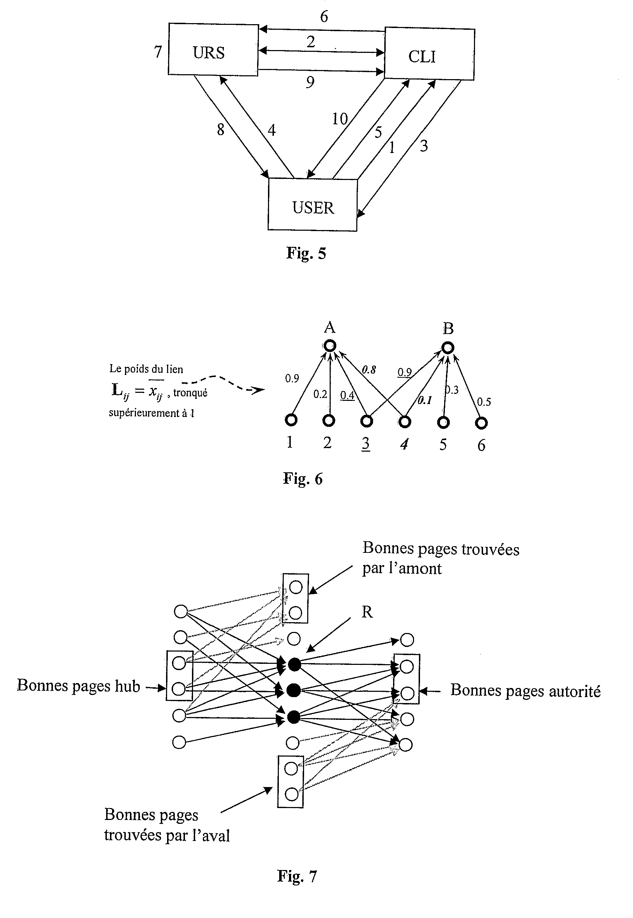

Un exemple plus complet (voir figures 4 et 5) :

Voici donc ce qui se passe lorsque l'utilisateur, déjà dans un contexte particulier (pour la page cl.com/main.html), clique sur un lien http://CLI.com/index.html?partie=1. (partie=1 signifie que l'utilisateur a cliqué dans la partie 1). On suppose que le serveur client CLI ne connaît pas encore l'utilisateur :

(1) Le navigateur (USER) envoie la requête http://CLI.com/index.html?partie=1 au serveur du site client (CLI) en lui donnant en plus le Referer http://c1.com/main.html (l'adresse de ce cadre).

(2) CLI va demander à URS un numéro libre (il lui répond avec 12345) pour cet utilisateur

(3) CLI répond à (1) avec une page comprenant deux cadres dont les adresses sont http://URS.com/default.html?newId=12345 et http://CLLcom/main.html respectivement. Il lui donne de plus un cookie temporaire (de session) newId=12345.

(4) L'utilisateur étant connu de URS, il a un cookie avec son vrai identifiant (678910). En chargeant les cadres, il (son navigateur) va envoyer une requête pour la page http://URS.com/default.html?newId=12345 avec le cookie ID=678910.

(5) L'utilisateur envoie également une requête pour la page http://CLI.com/main.html avec le cookie de session newId=12345.

(6) Ayant reçu (5), le client CLI envoie à URS son adresse (http://CLI.com/main.html), ses scores non contextuels, pour chaque partie de la nouvelle page, l'identifiant newID=12345, ainsi que le numéro de partie (partie=1) qu'il avait reçu au message (1).

(7) Quand il a reçu (4) et (6), URS regarde le contexte de l'utilisateur pour la partie 1, vérifie que la page source (http://CLI-com/main.html) correspond au dernier niveau de la pile de contexte pour cet utilisateur (sinon il aurait ignoré le numéro de partie et pris la partie par défaut "D"). Ensuite il calcule, pour chaque partie de la nouvelle page les nouveaux scores contextuels.

(8) URS, ayant reçu le message (6), peut répondre au message (4) de l'utilisateur (lui présentant la nouvelle pile de contexte et le bouton <ERASE>).

(9) URS répond également au message (6) de CLI en lui envoyant le vrai identifiant de l'utilisateur (678910), ainsi que les scores contextuels.

(10) CLI peut maintenant répondre au message (1), en donnant à l'utilisateur sont vrai identifiant (cookie permanent ID=678910, pour le site CLI.com), ainsi que la page personnalisée.

La notion d'utilisateur peut en réalité englober plusieurs utilisateurs qui partagent des liens ajoutés (et les groupes qui leurs servent de support). Bien entendu, une organisation plus fine des utilisateurs selon les liens ajoutés qu'ils partagent est possible.

On va maintenant décrire le cas où un utilisateur final s'abonne chez un utilisateur fournisseur afin que, selon le contexte, le système propose à l'utilisateur final les groupes et premières pages (au sens des groupes et premières pages décrites jusqu'ici) créés par l'utilisateur fournisseur. Les premières pages peuvent notamment être des publicités qui (grâce aux capacités du système que l'on a jusqu'ici) sont automatiquement sélectionnés par rapport au contexte.

Les groupes créés par l'utilisateur fournisseur et proposés par le système à l'utilisateur final sont appelés « spot ».

L'utilisateur fournisseur manipule et exploite les spots comme on l'a décrit jusqu'ici pour les groupes de deuxièmes pages.

L'utilisateur final peut utiliser un spot comme support de mémorisation en en faisant une version personnelle et en y ajoutant un lien vers une première page (ceci est décrit plus loin).

L'avantage principal de cette approche est de donner la possibilité de créer de nouveaux spots (et les coûteux calculs de scores qu'ils impliquent) à certains utilisateurs seulement (ce sont les utilisateurs fournisseurs) et d'offrir la fonction de mémorisation/recherche associative par l'intermédiaire de spots préexistants (qui n'est pas coûteuse en ressources machines) à tous les utilisateurs.

*Spot*

Le système que nous allons maintenant décrire fournit des liens pertinents (« related links », voir plus haut la section « L'état de la technique »). Toutefois, plutôt que de rechercher des liens pertinents directement, notre système recherche d'abord s'il existe un spot -ou ressource de référence- dont les liens associés sont suffisamment proches de la ressource courante ou du contexte de navigation de l'utilisateur. Si c'est le cas, le système retourne le (ou les) spot(s) dont les liens associés sont les plus proches, ainsi que ses liens associés offerts en guise de liens pertinents.

Typiquement le spot est proposé dans une fenêtre adjacente à la fenêtre principale du navigateur, comme les systèmes existants fournissant des « related links », cependant contrairement à ces systèmes existants

-   le système de l'invention présente des liens pertinents déterminés selon un procédé de distillation relative (détaillé plus loin),

- le contexte de navigation pris en compte par notre système n'est pas forcément uniquement la page courante, mais peut inclure l'ensemble des ressources accédées récemment par l'utilisateur (en utilisant le système) et qui sont pertinentes par rapport à la ressource courante[31]

- les spots servent de mémoire associative pour les utilisateurs fournisseurs ; en effet, quand un spot est présenté à un utilisateur final, les liens vers premières pages (ou autres ressources ajoutées[32], comme décrit précédemment) ajoutés par l'utilisateur fournisseur qui a créé le spot sont présentés audit utilisateur final[33],

- les spots servent de mémoire associative pour les utilisateurs finaux ; en effet, quand l'utilisateur final ajoute un lien vers une première page sur une deuxième page (comme on l'a décrit jusqu'ici), en réalité il ajoute un lien sur sa version personnelle du spot proposé pour cette deuxième page ou pour le contexte courant.

[31] Voir plus haut la description du procédé de sélection de groupes de deuxièmes pages (ici de spots) selon le contexte de navigation de l'utilisateur.

[32] Celles-ci incluent notamment des publicités pour le compte d'annonceurs. Avantageusement, ces publicités sont pertinentes par rapport au contexte (en tout cas les spots qui leurs servent de support le sont).

[33] (ce dernier pouvant d'ailleurs être ledit utilisateur fournisseur qui a créé le spot)

En outre, présenter à l'utilisateur final des liens pertinents par l'intermédiaire de spots offre des avantages en soi, tel que l'incitation à cliquer pour accéder à la ressource de référence (c'est-à-dire la page présentant le spot).

Examinons maintenant quelques scénarios typiques de mémorisation/recherche associative mettant en oeuvre les spots.

*Premier scénario d'utilisation :*

L'utilisateur fournisseur crée une nouvelle ressource ou choisit une ressource existante (par exemple une page Web à laquelle il vient d'accéder, ou un élément particulier contenu dans une page...) pour en faire la ressource de référence d'un nouveau spot.

Pour ce faire, il lui attribue au moins un lien associé donné pointant sur une page populaire.

Le système complète l'ensemble des liens associés[34] (comme décrit à la section « Sélectionner des spots »).

[34] C'est l'équivalent de la deuxième mémoire décrite à la section précédente.

Ainsi, dans le futur, chaque fois qu'un utilisateur final va accéder à une ressource pointée par l'un des liens associés à ce spot, ce spot pourra[35] lui être proposé.

[35] Ce ne sera pas forcément ce spot qui sera proposé mais plutôt, parmi tous les spots dont des liens associés pointent vers des ressources formant le contexte courant, le spot dans lequel ces lien associés ont les scores de pertinence les plus élevés (ou les spots dans lesquels ces lien associés ont les scores de pertinence les plus élevés). La sélection du (ou des) spot est décrite à la section « Sélectionner un spot ».

Et, comme on le décrit dans les deux scénarios d'utilisation suivants, des utilisateurs finaux pourront alors utiliser ce nouveau spot en tant que support de mémorisation (de manière analogue à l'utilisation d'une deuxième page ou d'un groupe de deuxièmes pages décrits plus haut).

Le créateur de ce spot a ainsi l'avantage non seulement de s'en servir pour lui-même mais aussi de le voir proposé à des utilisateurs finaux. Comme un lien sur la ressource de référence (incitant l'utilisateur à cliquer) est inclus dans la présentation du spot, la ressource de référence est ainsi promue auprès des utilisateurs finaux. En plus, ses liens ajoutés (telles que des publicités) sur ce spot seront présentés aux utilisateurs finaux.

*Deuxième scénarios d'utilisation :*

Sur le Web l'utilisateur final « tombe » sur une première page (ou autre type de ressource) tellement intéressante qu'il voudrait la mémoriser afin de pouvoir la retrouver facilement et retomber dessus spontanément quand il accède à des ressources pertinentes par rapport à elle.

Supposons qu'aucun spot n'est spontanément proposé par le système pour cette page. [36]

[36] Dans le cas contraire, sur (sa version personnelle de) ce spot, l'utilisateur va directement ajouter un lien vers cette première page Web. Mais noter cette action n'est pas strictement nécessaire. En effet, déjà sans rien faire l'utilisateur pourra retrouver cette première page en visitant une page proche et quelque peu populaire (en tant que lien pertinent associé à ce même spot ou à un spot voisin). Toutefois, en faisant cette action l'utilisateur a l'avantage supplémentaire de pouvoir la retrouver en tant que lien ajouté explicitement par lui, c'est-à-dire de manière à ce qu'elle soit mise en évidence.

L'utilisateur visite une (au moins une) deuxième page, qui soit pertinente par rapport à la première,

- et pour laquelle il sait qu'un spot est proposé,

- ou sinon il choisit une page Web qui soit populaire car il est ainsi plus probable qu'un spot soit proposé pour elle,

et sur le spot qui est proposé pour cette deuxième page il ajoute un lien vers cette première page (par exemple en sélectionnant un objet graphique représentant la première page et en en effectuant un glisser-déposer sur la deuxième page, comme décrit au début de la description).

Dans le futur, ce lien ajouté lui sera alors spontanément présenté chaque fois que ce même spot, ou qu'un spot proche, lui sera proposé pour le contexte courant de sa navigation.

*Troisiéme scénarios d'utilisation :*

L'utilisateur final veut mémoriser une ressource privée (tel qu'un document qui lui appartient et qui n'est pas publié sur le Web). La ressource privée joue ici le rôle de première page.

Il accède à une (deuxième) page qui est pertinente par rapport à sa ressource privée (et qui de préférence est populaire, ou pour laquelle il sait qu'un spot est proposé) et il lui ajoute un lien vers sa ressource privée (c'est-à-dire qu'il insère ce lien dans sa version personnelle du spot proposé pour cette deuxième page).

Optionnellement, pour renforcer son action, il va aussi ajouter un lien (vers sa ressource privée) sur encore (d'autres spots qui lui sont proposés pour) d'autres deuxièmes pages qu'il trouve pertinentes par rapport à sa ressource privée.

Dans le futur, un lien vers sa ressource privée lui sera spontanément présenté chaque fois que l'un des spots qui lui étaient proposées pour la ou les deuxième(s) page(s), ou qu'un spot proche, lui sera proposé pour le contexte courant de sa navigation.

Ainsi, dans les deux derniers scénarios ci-dessus, un lien vers la première page est spontanément présenté à l'utilisateur chaque fois qu'il va visiter des pages dans le domaine de pertinence couvert par les spots proposés pour les deuxièmes pages [37].

[37] Et dans la mesure où les deuxièmes pages ont été choisies par l'utilisateur parce que selon lui elles sont pertinentes par rapport à la première page, et la relation de pertinence est transitive à ce niveau, un lien vers la première page est spontanément présenté à l'utilisateur chaque fois qu'il va visiter des pages qui selon lui sont dans le domaine de pertinence de la première page !

*Sélection des spots*

Avant l'étape de sélection de spot(s) proprement dit, le système doit obtenir l'ensemble des « liens associés complétés » à partir de l'ensemble des « liens associés donnés » (qui sont donnés par l'utilisateur fournisseur, comme décrit dans le premier scénario d'utilisation).

Compléter les liens associés :

L'ensemble des ressources pointées par les liens associés donnés est la requête R.

Le calcul des liens associés complétés s'effectue au moyen du procédé de « distillation relative », comprenant les étapes suivantes :

Etape 1 : Identifier l'ensemble $R^-$ des ressources qui possèdent au moins un lien pointant sur un élément de R.

Etape 2 : Identifier l'ensemble $R^{-+}$ des ressources pointées par les éléments de $R^-$ (noter que $R^{-+}$ inclut R).

Etape 3 : Pour chaque ressource de $R^{-+}$ calculer son score autorité par rapport à R. (Cette étape peut inclure l'identification d'une partie des ressources de $R^{-+-}$ possédant un lien pointant vers une ressource de $R^{-+}$)[38].

Etape finale : Sélectionner les éléments de $R^{-+}$ ayant les plus grands scores autorité.

[38] La prise en compte des ressources de $R^{-+}$ débutera dès la première itération, comme décrit plus loin.

Le calcul des scores à l'étape 3 peut s'effectuer en calculant, pour chaque ressource de $R^{-+}$, le rapport entre

- la cardinalité de l'ensemble des ressources qui pointent vers elle ET vers les ressources de la requête et

- la cardinalité de l'ensemble des ressources qui pointent vers elle OU vers les ressources de la requête

(ou au moyen de l'une des équations plus complètes décrites plus loin, voir notamment l'équation de quantité de raisons communes -ou homogénéité- d'un ensemble de ressources).

Les scores autorités sont normalisés (de manière à ce que leur somme devienne égale à 1).

Les scores autorité étant obtenus, on peut s'en servir pour attribuer des <u>scores pivot</u> aux éléments de R⁻ :

Etape 4 : Le score pivot de chaque élément de R- est obtenu en prenant la somme des scores autorité (calculés à l'étape 3) des éléments de R⁻⁺ vers lesquels il pointe. Les scores pivots sont normalisés (de manière à ce que leur somme devienne égale à 1).

Itération en repartant de l'étape 3: Les scores pivots étant obtenus, on peut s'en servir pour affiner le calcul des scores autorité. L'étape 3 tient alors compte des scores pivot pour ne pas considérer tous les éléments de R⁻ sur un pied d'égalité (les ressources de R⁻ pointant vers des ressources ayant un score autorité plus élevé auront ainsi une influence plus grande). Les cardinalités utilisées pour calculer les scores autorités sont ainsi remplacées par des cardinalités pondérées. C'est-à-dire que chaque ressource pivot, au lieu de compter pour un, compte proportionnellement à son score pivot. (Les équations sont détaillées plus loin).

L'étape 3 inclut alors la prise en compte des ressources de R⁻⁺⁻ pointant vers les ressources de R⁻⁺ ayant les plus grands scores autorité, en plus de R⁻ (un procédé optimisant la prise en compte de R⁻⁺⁻ est décrit plus loin).

Après l'étape 3 on peut optionnellement effectuer l'étape 4 à nouveau, et ainsi de suite jusqu'à convergence, c'est-à-dire jusqu'à ce que la différence entre les résultats obtenus dans la dernière itération et ceux obtenus dans l'itération précédente soit négligeable (en général, moins de 10 itérations suffisent).

Variante pour l'étape 2 : Pour former R⁻⁺, au lieu de prendre tous les liens contenues dans les ressources R⁻ le système ne prendra que les liens se trouvant dans les <u>régions pertinentes</u> des ressources de R⁻. Comme ces régions pertinentes ne peuvent être déterminées qu'à partir du moment où les scores pivot des liens qu'elles contiennent sont connus, on ne mettra cette variante en oeuvre qu'à partir de la première itération, c'est-à-dire qu'après avoir effectué l'étape 4 le système va itérer en reprenant à partir de l'étape 2 plutôt qu'à partir de l'étape 3.

Variante pour l'étape 3 :

A chaque lien possédé par une ressource de R⁻ (ou de R⁻⁺⁻) est associé un poids égal au complément de la proximité des deux ressources reliées par ce lien. Ainsi, on va affaiblir les liens reliant deux ressources proches. On diminue ainsi l'importance des liens entre les ressources qui se promeuvent mutuellement (par exemple par ce qu'elle font partie d'un même site Web et se citent mutuellement). Une fois que les liens sont ainsi pondérés, le système calculer les scores autorité en utilisant non plus la somme des scores pivots, mais la somme des scores pivots multipliés par leurs poids (ceci est détaillé et illustré par un exemple plus loin).

La proximité des deux ressources reliés par le lien en question est obtenue en calculant le rapport entre

- la cardinalité de l'ensemble des ressources qui pointent vers les deux ressources reliées et

- la cardinalité de l'ensemble des ressources qui pointent vers au moins une des ressources reliées.

(ou au moyen notamment de l'une des équations plus complètes décrites plus loin).

Il est aussi avantageux d'effectuer le même algorithme par l'aval, c'est-à-dire en calculant les scores pivot des ressources de $R^{+-}$ (qui citent à l'aval les mêmes ressources que la requête).

Les algorithmes par l'aval sont identiques à ceux par l'amont sauf que *B* (backward) est remplacé par F (forward) et vice-versa[39], et ⁻ est interverti avec ⁺ (e.g. R⁻⁺ est remplacé par $R^{+-}$).

[39] $B(R_i)$ est l'ensemble des URIs des pages ayant un lien vers la page $R_i$. $F(R_i)$ est l'ensemble des URIs des pages vers lesquelles $R_i$ a un lien.

On considérera aussi, avantageusement, les ressource pivots à l'amont et les ressources autorités à l'aval, de manière à ce que les pages pivot dans l'étape m1-1 et les pages autorité dans l'étape m1-1' acquièrent aussi des scores de pertinence (respectivement scores pivot et scores autorité) et puissent ainsi être inclus dans l'ensemble résultant fourni à l'étape ml-2 (en plus des URI des pages de R⁻⁺ et/ou de R⁺⁻).

En complétant les liens associés de chaque nouvelle requête (spot) introduite, le système forme une mémoire inverse apte à fournir, pour chaque ressource courante potentielle correspondant à un lien associé, les requêtes les plus pertinentes (c'est-à-dire les spots les plus pertinents).

Autrement dit, la mémorisation associative comprend maintenant les étapes suivantes :

(L'étape m0 est effectuée de manière indépendante des autres étapes. L'étape m1 est effectuée seulement pour les requêtes, non déjà connues par le système ou pas suffisamment fraîches, introduites par un utilisateur fournisseur, tandis que l'étape m2 est effectuée pour chaque utilisation d'une requête (c'est-à-dire d'un spot) comme support de mémorisation associative par un utilisateur fournisseur ou un utilisateur final.)

Etape m0 : mémoriser (dans une troisième mémoire) les droits d'utilisation de spots pour chaque utilisateur.

Etape m1 :

L'étape ml-1 correspond à compléter les liens associés comme décrit ci avant.

Etape m1-2 : mémoriser, dans une deuxième mémoire, les URI des ressources ayant un score de pertinence suffisant par rapport à *R*, en relation avec R, de manière à ce qu'à partir de l'URI de chacune desdites ressources ayant un score de pertinence suffisant par rapport à *R* on puisse retrouver[40] R ainsi que ledit score de pertinence suffisant;

[40] (parmi l'ensemble des requêtes mémorisées, le cas échéant, pour cette ressource)

Etape m2 : (en parallèle avec l'étape ml) mémoriser dans une première mémoire, pour chaque utilisateur et requête, les liens ajoutés (vers premières ressources) ;
Lors de l'accès à une ressource courante par un utilisateur :

Etape b-m : Sélectionner dans la deuxième mémoire un certain nombre de requêtes, parmi les requêtes (spots) que ledit utilisateur a le droit d'utiliser (indiqués dans la première mémoire), pour lesquelles les scores de pertinence de ladite ressource courante sont les plus élevés (s'ils existent) et pour lesquels les scores de pertinence des liens associés sont les plus proches des scores de pertinence contextuels pour ledit utilisateur;

Etape c : Retrouver dans la première mémoire les liens ajoutés par ledit utilisateur sur les requêtes sélectionnées à l'étape b-m, ainsi que les liens ajoutés par leurs créateurs (s'ils sont différents dudit utilisateur), et les présenter audit utilisateur, avec optionnellement :

- les (ou un certain nombre des) requêtes sur lesquelles ils ont été ajoutés,

- ainsi qu'un certain nombre de (liens associés vers des) ressources ayant un score de pertinence estimé (à l'étape ml-2) suffisant par rapport auxdites requêtes sélectionnées à l'étape b-m.

On va maintenant détailler le procédé de distillation relative.
L'idée essentielle du calcul du score de pertinence (d'une page Web $P_2$ par rapport à une page Web donnée $P_1$) est la suivante[41] :

Soit $p_1$ la probabilité[42] qu'un auteur aléatoire (de page Web) mette dans une page un lien sur $P_1$.

Soit $p_2$ la probabilité qu'un auteur aléatoire mette dans une page un lien sur $P_2$.

Soit $p_{1\&2}$ la probabilité qu'un auteur aléatoire, mette dans une page un lien sur $P_1$ et un lien sur $P_2$.

$B(P_i)$ est l'ensemble des URIs des pages ayant un lien vers la page $P_i$.

$F(P_i)$ est l'ensemble des URIs des pages vers lesquelles $P_i$ a un lien.

[41] Ci-après, nous allons considérer que $P_1$ et $P_2$, (ou $P_i$, $P_j$, etc) sont des pages Web, bien que les procédés décrits soient bien plus généraux, comme on l'a déjà mentionné. Par exemple, il est à noter qu'au lieu d'exploiter les liens hypertextes et les requêtes comme mentionnés ci-dessus, le système peut être basé sur une analyse des traces des copier-coller (ou couper-coller) de fragments d'information effectués par les utilisateurs (dans le cadre des créations et manipulations de ressource d'information), pour suggérer automatiquement d'autres fragments qui sont susceptibles d'enrichir ces ressources. Ces traces peuvent en effet être assimilées à des liens. Par exemple, quand on copie une partie d'une page Web dans un document, le système est capable d'en déduire et de mémoriser l'existence dans le document d'un lien vers la page Web, et les mêmes mécanismes décrits ici peuvent alors être appliqués. Par ailleurs, le procédé que l'on décrit ici peut avantageusement être appliqué en assimilant les liens d'une ressource vers une autre ressource à des liens d'un utilisateur vers une ressource qu'il aime (c'est-à-dire vers une ressource qui l'intéresse). On peut ainsi déterminer la quantité de raisons communes (entre plusieurs ressources) d'être aimées par des utilisateurs. Ceci peut notamment servir à catégoriser ces ressources.

[42] La probabilité d'être intéressé par une (ou certaines) page(s) est approchée en comptant le nombre de pages qui ont un lien sur elle(s) et en divisant ce nombre par une estimation du nombre de pages qui auraient pu en avoir.

La pertinence d'une page par rapport à un ensemble de pages peut être définie par la « quantité de raisons communes » d'être intéressé par toutes ces pages.

Des calculs algébriques permettent d'obtenir des équations donnant la quantité de raisons communes entre plusieurs pages. Cette quantité (ou proximité, ou encore homogénéité) est notée $x$, avec en indice les pages dont il est question ; la probabilité d'être lié à une certaine page $P_i$ est notée $p_i$ ; la probabilité d'être lié à *au moins* une page parmi $P_i$, $P_j$, ..., $P_n$ est notée $p_{ij...n}$ :

$$\overline{x_{ij}} = \frac{\overline{p_i} \cdot \overline{p_j}}{\overline{p_\varnothing} \cdot \overline{p_{ij}}}, \quad \overline{x_{ijk}} = \frac{\overline{p_i} \cdot \overline{p_j} \cdot \overline{p_k} \cdot \overline{p_{ijk}}}{\overline{p_\varnothing} \cdot \overline{p_{ij}} \cdot \overline{p_{ik}} \cdot \overline{p_{jk}}},$$

et ainsi de suite (tous les sous-ensembles de taille impaire au numérateur, et les autres au dénominateur)[43].

[43] Les barres supérieures indiquent des compléments, et $p_\varnothing$, la probabilité d'aimer au moins une page d'un ensemble vide, est une constante égale à zéro ; elle est présente dans l'équation pour des raisons de cohérence.

Cette équation peut être notée de façon plus compacte ainsi : $\overline{x_S} = \prod_{P \subset S} \overline{p_P}^{\sigma_P}$ avec $\sigma_P = (-1)^{|P|}$.

Les probabilités dont il est question ci-dessus font intervenir le nombre (le comptage) des pages de $R^-$ qui contiennent un lien donné ou un lien parmi un ensemble d'URI donnés (vers des pages de $R^{-+}$). On gagnerait à pondérer ce nombre par la *qualité de citation* (score pivot, décrit plus loin) de chaque page qui contient un tel lien.

On voudrait ainsi qu'une page de $R^-$ citant plus de meilleures pages (de $R^{-+}$) soit considérée comme étant de meilleure qualité de citation, et qu'en retour un poids plus fort lui soit donné dans le cadre du calcul des scores[44] des pages qu'elle cite ($R^{-+}$), les scores des pages de $R^-$ et ceux des pages de $R^{-+}$ s'influençant mutuellement dans une approche itérative (de renforcement bipartite) qui converge[45].

[44] Rappelons qu'il s'agit ici de scores de pertinence par rapport à la requête, contrairement de l'état de la technique qui permet de déterminer un score de qualité « dans l'absolu ».

[45] Noter que le calcul du score de pertinence d'une page de $R^{-+}$ peut résulter en une valeur négative (que l'on va alors neutraliser ; ceci est décrit plus loin). En effet, certaines pages peuvent être, non seulement pas proches de la requête, mais même antagonistes par rapport à elle (le fait d'y être intéressé diminue les chances d'aimer les pages de la requête et inversement).

Le nombre de pages de $R^{-+-}$ citant chaque page candidate (c'est-à-dire de $R^{-+}$) intervient aussi dans les calculs. Or leur prise en compte coûte cher. On va alors approximer les résultats en ne considérant que celles qui citent les pages candidates ayant un bon score, ce score étant calculé d'abord en ne considérant que $R^-$ et ensuite en étendant cet ensemble vers $R^{-+-}$ progressivement.

Pour calculer le score de pertinence d'une page candidate, au lieu de prendre le résultat de l'équation de quantité de raisons directement, il est préférable

• de la prendre avec les cardinalités d'ensemble remplacées par le total des scores pivot des pages en question et

• de multiplier ce résultat par le score autorité de la page candidate (simplement calculé à partir du total des scores pivot des pages citantes), afin d'affaiblir ainsi les pages qui sont relativement moins fiables (car moins populaires).

Après une première itération, dans les pages citantes le système peut

• repérer les régions contenant des liens dirigés sur des pages de $R^{-+}$ ayant un bon score

• et commencer déjà à élaguer les liens qui ne sont pas situés dans ces régions.

Comme les liens en question se trouvent placés sous des noeuds d'une structure typiquement arborescente de document (tel qu'en HTML notamment), pour déterminer une région de pertinence il suffit de prendre les noeuds (minimaux) qui englobent tous les bons liens et de leur retrancher les sous-noeuds (maximaux) qui contiennent un mauvais lien (score trop faible, ou URI explicitement refusé) et qui ne contiennent pas de bon lien (score suffisant).

L'algorithme permet, ayant un ensemble homogène (ayant une homogénéité suffisante) d'URIs associé à des pages proches, d'obtenir une liste d'URIs de pages qui sont pertinentes relativement à cet ensemble. Il sera décrit plus loin comment exploiter cet algorithme pour obtenir un ensemble de pages pertinentes pour un ensemble inhomogène.

En entrée, cet algorithme prend

- un ensemble K d'URIs de référence (« Kernel »)

- un ensemble A d'URIs candidats (« Authorité »)

- un ensemble H d'URIs candidats pivots (« Hub » ou « Pivot » en français)

- un ensemble T d'URIs à refuser (« Trash »)

On a : $K^- \subset H \subset A^-$ et $T \cap K = \varnothing$.($E$ étant un ensemble d'URIs, $E^- = \bigcup_{P_i \in E} B(P_i)$ et $E^+ = \bigcup_{P_i \in E} F(P_i)$)

1. Associer à chaque page $P_i$ de $H$, un nombre $h_i$, mis initialement à $\dfrac{1}{|H|}$, son score pivot[46].

[46] Ainsi, avantageusement, la somme des |H| scores $h_i$ est égale à 1.

2. (Re-)calculer les scores autorité :

    *a.* Pour chaque page $P_i$ de $A$, en commençant par celles de $K$, associer un nombre $a_i$, son score autorité, égal à $\sum_j l_{ji} \cdot h_j$ , où $l_{ji} = \begin{cases} 0 \text{ s'il n'y a pas de lien entre } P_j \text{ et } P_i \\ 1 \text{ s'il y a un lien entre } P_j \text{ et } P_i \end{cases}$ .

    b. Une optimisation possible mais dangereuse : si, pour certaines pages, $a_i$ est suffisamment proche de sa valeur calculée précédemment (le cas échéant), et que les scores autorité des pages de $K$ n'ont pas varié non plus, nous pouvons garder l'ancienne valeur de $r_i$ pour cette page, pour économiser les calculs.

3. (Re-)calculer les scores de pertinence :

    a. Pour chaque page $P_i$ de $A$ calculer $r_t^+$, égal à $w_{i \cup K}$

$$r_i^+ = w_{i \cup K}$$

et dans le cas où le résultat est négatif (cas d'une page antagoniste à $R$) neutraliser les liens entrants de manière à avoir $r_i^+ = 0$.

L'homogénéité par l'amont $w_S$ d'un ensemble $S$ est définie comme suit:

$$\overline{w_S} = \prod_{P \subset S} \overline{a_P}^{\sigma_P} ,$$

où

    ▪ $\sigma_P = \begin{cases} -1 \text{ si } P \text{ contient un nombre pair de pages} \\ +1 \text{ sinon} \end{cases}$

    ▪ $a_P = \Delta \sum_j h_j l_{jP}$ où

$\Delta$ est une constante arbitraire inférieure mais proche de 1 (elle sert à éviter des divisions par zéro mais ne change pas le principe de l'algorithme. Si l'ensemble H est plus grand que K⁻ alors cette constante peut être égale à un

$$l_{jP} = \begin{cases} +1 \text{ si } \exists P_i \in P \mid l_{ji} = +1 \\ 0 \text{ sinon} \end{cases},$$

avec $l_{ji} = \begin{cases} 0 \text{ s'il n' y a pas de lien entre } P_j \text{ et } P_i \\ 1 \text{ s'il y a un lien entre } P_j \text{ et } P_i \end{cases}$

En d'autres termes, $l_{jP}$ est égal à 1 s'il y a un lien

* d'une page $P_j$ (de $H$)
* à au moins une page $P_i$ de $P$

et zéro sinon.

Ceci signifie tout simplement que $a_P$ est le total des scores pivot des pages (de $H$) qui pointent sur au moins une page de $P$ ($P$ étant le sous-ensemble courant de $S$ qui est considéré).

*Pour chaque lien $l_{ji}$ existant on peut lui associer un poids en fonction de la proximité des pages $P_i$ et $P_j$ et améliorer ainsi le résultat - voir plus loin.*

Ici, puisque $\forall P_i \in K$ on a $r_i^+ = w_K$ (la pertinence est la même pour toutes les pages $P_i$ de $K$), le score de pertinence $r_i^+$ ne doit être calculée qu'une seule fois pour les pages de $K$ (elle sera d'ailleurs déjà calculée lors de la procédure de découpage de la requête $R$ en sous-requêtes (noyaux) $K$, et sera donc déjà connue à l'entrée de la procédure).

b. (Ce point sera sauté la première fois.) Pour avoir leur somme égal à 1, on doit diviser chaque $r_i^+$ par la somme

$\Sigma|r_i^+|$ de toutes les valeurs absolues des $r_i^+$, Soit $\delta = \sum_i \left| r_i - \dfrac{r_i^+}{\sum |r_i^+|} \right|$, la variation globale du score de

pertinence.

Si $\delta < \varepsilon$ ($\varepsilon > 0$ étant une marge d'erreur), on considère avoir convergé et le procédé s'arrête. Sinon, le procédé continue.

c. On remplace $r_i$ par $\dfrac{r_i^+}{\sum_i \left| r_i^+ \right|}$

$$r_i \mapsto \dfrac{r_i^+}{\sum_i \left| r_i^+ \right|}$$

on peut aussi utiliser un facteur de frottement $\tau$ :

$$r_i \mapsto \tau r_i + \overline{\tau} \dfrac{r_i^+}{\sum_i \left| r_i^+ \right|} . \ (\tau \in [0;1[,$$

on prendra de préférence une valeur très petite e.g. 0.01 pour que dans les cas où ce n'est pas nécessaire le nombre d'itérations ne change pas)

4. [47]Pour chaque page $P_i$ de $H$ :

a. Trouver tous les liens qui pointent sur une page ayant un score de pertinence plus grand qu'un seuil epsilon à choisir ( $\varepsilon$>0 ).

b. Trouver $I_i$, le plus petit élément HTML [48] contenant la totalité des liens trouvés au point a ci-dessus.

c. Pour chaque lien pointant sur une page de $T$ (si $T$ n'est pas vide), trouver le plus grand élément HTML le contenant (s'il y en a) et ne contenant pas de lien trouvé au point a. ci-dessus, et l'enlever de $I_i$.

d. On garde tous les liens restant dans $I_i$ et on supprime les autres (ou bien on les neutralise en mettant leur $I_{ij}$ à zéro)

5. Recalculer les scores pivot:

a. Pour chaque page $P_i$ de $H$, calculer $h_i^+ = \sum_j l_{ij} r_j$ , la somme des scores de pertinence des pages pointées.

b. $h_i \mapsto \dfrac{h_i^+}{\sum \left| h_i^+ \right|}$

(La division par $\sum |h_i^+|$ est, comme pour le score de pertinence, pour garder leur somme égale à 1).

[47] Ce point peut éventuellement être ignoré après la première fois.
[48] (ou autre représentation analogue...)

Ensuite retourner au point 2.

Initialement, pour ne traiter qu'un nombre réduit de pages, les scores de pertinence peuvent être calculés sur la base de $R^-$ (si on avait pris $H=R^-$). Ceci ne sera alors qu'une approximation. En effet, pour que les scores soient corrects, il faudrait les calculer en se basant plutôt sur $H=R^{-+-}$. Mais comme la constitution de $R^{-+-}$ est relativement coûteuse, on ne prendra qu'un sous-ensemble : on prendra pour $R^{-+-}$ seulement les pages pointant sur les pages de $A$ qui ont un bon score.

Ainsi[49], on va ajouter une sous-étape avant la fin de l'étape 2.a :

2.a.1. Dans le cas où le score $r_i^+$ de la page courante ($P_i$ de $A$) est suffisant[50], on recalcule $r_i^+$ après avoir inséré dans $H$ les nouvelles pages de $B(P_i)$

[49] Plusieurs méthodes peuvent être utilisées ; nous présentons ici la préférée.
[50] (c'est-à-dire supérieur à un seuil choisi ; ce seuil pourra être fonction de la cardinalité courante de $H$, en effet plus on se rapproche de $R^{-+-}$ (*e.g.* $H_{final}$), plus le score calculé a des chances d'être déjà correct)

$$H \mapsto B(P_i) \bigcup H .$$

On introduit un score autorité pour les pages de $A$ et l'équation $r_i^+$ est $r = w_{i \cup K} \cdot a_i$ (plutôt que $r = w_{i \cup K}$). Le nouveau coefficient $a_i$ permettra d'affaiblir les pages peu fiables (par le fait qu'ils sont peu populaires). En outre, l'équation sera plus cohérente dans la mesure où le score pertinence ne sera plus le même pour toutes les pages de la requête.

La procédure est maintenant la suivante :

1. Ce point est le même que celui de l'algorithme de calcul de scores de pertinence présenté plus haut.

2. Ce point ne change pas non plus.

3. (Re-)calculer les scores de pertinence :

a. Pour chaque page $P_i$ de $A$ calculer $r_i^+$, égal à $w_{i \cup K} \cdot a_i$ et dans le cas où le résultat est négatif (cas d'une page antagoniste à $R$) neutraliser les liens entrants de manière à avoir $r_i^+ = 0$.

b. Poursuivre à partir du point 3.b de l'algorithme de calcul de scores de pertinence présenté précédemment.

Filtrage :

Pour chaque lien l$_{ji}$ existant on peut lui associer un poids en fonction de la proximité des pages P$_i$ et P$_j$ et améliorer ainsi le résultat. Cela permet de diminuer l'importance des liens entre pages qui se promeuvent mutuellement. Typiquement on arrive ainsi à filtrer par exemple les liens des « sommaires » et autres « menus » qui, de manière répétitive, se trouvent dans toutes les pages d'un site.

L'idée de base consiste à affaiblir les liens reliant deux pages que nous savons proches, en affectant un poids à chaque lien, poids qui sera égal au complément de la proximité des deux pages reliées (plus la proximité est grande, plus le lien doit être affaibli). Une fois que les liens sont ainsi pondérés, il est possible de calculer l'homogénéité d'un ensemble de pages en utilisant non plus le nombre de pages citantes, mais la somme de leurs poids.

Au point 3.a de l'algorithme, on remplace dans la définition de du score autorité $\sum_j h_j l_{jP}$ par

$$\sum_j h_j \ell_{jP} \quad \text{où} \quad \ell_{jP} = \min\left[1; \max_{P_i \in P}\left(l_{ji} \cdot \overline{x_{ji}}\right)\right]$$

Explications :

- $l_{ji} \cdot \overline{x_{ji}}$ est le complément de la proximité entre la page P$_j$ et la page P$_i$ s'il y a un lien de la page P$_j$ à la page P$_i$, et zéro sinon

- $\max_{P_i \in P}\left(l_{ji} \cdot \overline{x_{ji}}\right)$ est le complément de la proximité entre la page $P_j \in H$ en question et la *page $P_i \in P$* pour laquelle le lien entre $P_j$ et $P_i$ présente la proximité minimum

- $\min\left[1; \max_{P_i \in P}\left(l_{ji} \cdot \overline{x_{ji}}\right)\right]$ signifie que cette valeur est tronquée supérieurement à 1

- et toujours $l_{ji} = \begin{cases} 0 \text{ s'il n'y a pas de lien entre } P_j \text{ et } P_i \\ 1 \text{ s'il y a un lien entre } P_j \text{ et } P_i \end{cases}$ .

En d'autres termes, s'il y a au moins un lien

- de la page $P_j$ (de *H*) en question
- à une page $P_i$ de *P,*

$\ell_{jP}$ est égal au complément de la proximité entre la page $P_j$ et la page $P_i$ qui lui est la moins proche et vers laquelle elle possède un lien. $\sum_j \ell_{jP}$ est la somme des poids ainsi associés aux pages de *H* qui pointent sur au moins une des pages du sous-ensemble *P* considéré.

Pour déterminer la proximité $x_{ji}$, on peut prendre l'équation de quantité de raisons communes (déjà décrite) :

$$\overline{x_{AB}} = \frac{\overline{p_A} \cdot \overline{p_B}}{p_\emptyset \cdot p_{AB}}$$

La figure 6 présente un exemple où le nombre de pages pointant sur la page A est égal à 0.9+0.2+0.4+**0.8**=**2.3**

Le nombre de pages pointant sur la page B est égal à 0.9+**0.1**+0.3+0.5=**1.8**

Le nombre de pages pointant sur A ou B (N$_{PAB}$) est égal à 0.9+0.2+0.9+**0.8**+0.3+0.5=**3.6**

Ainsi, si on considère que |*H*| + $\hbar$ = 100, le calcul de la proximité de A et B donne :

$$\overline{x_{AB}} = \frac{\overline{p_A} \cdot \overline{p_B}}{p_\emptyset \cdot p_{AB}} = \frac{0.977 \cdot 0.982}{1 \cdot 0.964},$$

ce qui donne $\widetilde{x}_{AB} = \dfrac{x_{AB}}{p_B} \approx 0.264 = 26.4\%$ .

Le filtrage décrit ci-dessus utilise un poids $\overline{x_{ji}}$. Puisque nous avons maintenant les scores[51] des pages citantes, nous pouvons optionnellement améliorer le procédé en prenant $\overline{x_{ji} \cdot \overline{h_j}}$ comme poids (au lieu de $\overline{x_{ji}}$), où $h_j$ est le score de la page citante (affaiblir un lien (d'une page citante $P_j$ à une page citée $P_i$) davantage quand le score de la page citante $P_j$ est faible.

[51] (que ce soit de manière absolue ou par rapport à la requête)

Il est à noter que pour calculer la proximité $x_{ji}$ entre deux pages $P_i$ et $P_j$ *reliées,* au lieu d'utiliser l'équation de quantité de raisons comme illustré ci-dessus, on peut effectuer le rapport entre :

- la cardinalité de l'ensemble des pages qui pointent vers $P_i$ ET $P_j$
- et la cardinalité de l'ensemble des pages qui pointent vers $P_i$ OU $P_j$.

Détermination des sous-ensemble homogènes d'une requête :

On fournit au système un ensemble $R$ de pages et éventuellement un ensemble de pages $R_X$ de pages qu'on ne veut explicitement pas ($R \cap R_x = \varnothing$). Le système va identifier au sein de $R$ au moins un groupe de pages « homogène » et va lancer une sous-requête séparée sur ce ou chaque groupe. Ces groupes sont appellés « kernel » (ou noyau). Pour former la réponse on prendra ensuite une combinaison des scores <u>obtenus. Ce procédé comprend ainsi les étapes suivantes :</u>

1. Pour chaque page $P_i$ de $R$, trouver $B(P_i)$, l'ensemble de pages citant $P_i$.

2. Trouver $R^- = \bigcup_{P_i \in R} B(P_i)$, l'ensemble de pages citant au moins une page de $R$.

3. Dans les pages de $R$ qui ne sont pas encore dans un noyau (au début aucune ne l'est), trouver la page $P_B$ ayant le plus grand ensemble $B(P_B)$ de liens entrants[52], et créer un noyau contenant seulement cette page. Ce noyau est maintenant $K_C$, le noyau courant en construction (à tout instant il n'y en a qu'un seul). Si toutes les pages se trouvaient dans au moins un noyau alors passer au point six.

4. Trouver les pages pertinentes par rapport à $K_C$ (en utilisant l'algorithme de calcul de scores de pertinence) avec

- ∘ $H = R^-$
- ∘ $A = R$
- ∘ $K = K_C$
- ∘ $T = R_X$

5. Soit $P_N$ la page de $R$, pas encore dans $K_C$, qui a le score de pertinence le plus élevé. Si son score de pertinence est inférieur à un score minimal fixé, retourner au point trois. (le noyau courant est maintenant complet). Sinon l'insérer dans $K_C$ et repasser au point quatre. A noter qu'il ne sera pas nécessaire de réinitialiser les scores pivot et autorité, il est préférable de garder les dernières valeurs calculées, ainsi la convergence devrait être très rapide.

6. On a maintenant un ensemble de noyaux (sous-requêtes homogènes par l'amont) prêtes à être utilisées comme décrit dans ce document. Lorsqu'on veut calculer les scores de pertinence globalement à toute la requête on fait une moyenne arithmétique des résultats pour chacun des noyaux.

[52] Dans le cas où on a les scores autorité des pages, ou autre score de popularité, on préfère se baser plutôt sur eux.

En variante, au lieu de se baser sur l'équation d'homogénéité $\overline{x_S} = \prod_{P \subset S} \overline{p_P}^{(-1)^{|P|}}$ comme décrit jusqu'ici, le procédé de calcul de scores de pertinence peut être basé sur une autre équation d'homogénéité, comme par exemple

$$x_S = \frac{\left|\bigcap_{P_i \in S} B(P_i)\right|}{\left|\bigcup_{P_i \in S} B(P_i)\right|} \quad \text{ou encore} \quad x_S = \frac{\left|\bigcap_{P_i \in S} B(P_i)\right|}{\left|\bigcup_{P_i \in S} B(P_i)\right|} \cdot \left(\frac{\underset{P_i \in S}{Min}|B(P_i)|}{\underset{P_i \in S}{Max}|B(P_i)|}\right)$$

dans lesquelles les cardinalités d'ensemble (représentées entre barres verticales) sont remplacées par le total des scores pivot des pages en question[53].

[53] On peut dire que l'on remplace les cardinalités par des « cardinalités pondérés », les poids étant les scores hub.

Traitement par l'aval :

Au lieu de chercher les bonnes pages relativement à celles d'un noyau parmi les pages qui sont citées en commun avec elles il peut être intéressant d'effectuer les mêmes algorithmes dans l'autre sens, i.e. en cherchant parmi les pages qui citent les mêmes pages que le noyau, voire même d'effectuer les deux et de calculer une moyenne arithmétique.

Les algorithmes par l'aval sont identiques à ceux par l'amont sauf que B est remplacé par F et F est remplacé par B, et $^-$ est interverti avec $^+$ (pair exemple $R^{-+}$ est remplacé par $R^{+-}$).

Les procédés par l'amont et par l'aval peuvent être avantageusement intégrés de la manière suivante : Après le traitement par l'amont (éventuellement même après chaque itération amont), aux pages candidates ($R^{-+}$) ayant obtenu un score de pertinence suffisant, on associe à l'aval un ensemble de pages supplémentaires (« pages artificielles ») dont la cardinalité est fonction dudit score de pertinence. Chaque page artificielle est aussi citée par (au moins) une page de la requête. On donne ainsi à l'aval un « avantage » aux scores de ces bonnes pages (de $R^{-+}$) trouvées par l'amont[54], et par conséquent on donne aussi indirectement un avantage aux scores des pages (de $R^{+-+}$) citées le cas échéant par ces bonnes pages.

[54] Noter que, avantageusement, ceci se fait sans amalgamer les scores de pertinence par l'amont et par l'aval.

Et réciproquement, après le traitement par l'aval (éventuellement même après chaque itération aval), on applique à l'amont le même procédé de manière symétrique. On favorise ainsi les bonnes pages de $R^{+-}$ et indirectement les pages (de $R^{-+-}$) qui les citent le cas échéant.

Le fait de ne pas amalgamer les scores par l'amont (des pages $R^{-+}$) avec les scores par l'aval (pages $R^{+-}$) permet de les dissocier dans les calculs. Notamment, on peut diminuer l'influence des scores obtenus par l'aval dans les traitements par l'amont ou vice-versa.

Par ailleurs, grâce à cette idée de « pages artificielles », le présent procédé peut être appliquée en complément aux méthodes existantes dans l'état de la technique. En effet, une fois les scores obtenus pour chaque page, on peut modifier artificiellement les nombres respectifs des pages citantes et citées avant d'appliquer ces méthodes.

On peut arpenter (« crawling » en terminologie anglo-saxonne) le Web en suivant les liens (en amont et en aval) autour des pages des 7 ensembles précédemment citées, en tirant parti de l'ajout des pages artificielles pour avantager les pages Web liées aux pages qui sont plus pertinentes par rapport à la requête.

Dans la mesure où les pages ayant les meilleurs scores sont censées être très pertinentes pour l'utilisateur (et dans la mesure où la pertinence est transitive), les procédés décrits ici pourront être récursivement appliqués sur ces dernières pour découvrir encore d'autres pages pertinentes. On peut ainsi arpenter le Web à partir de la requête de l'utilisateur.

La figure 7 présente de manière schématique un tel procédé : la recherche de pages pertinentes peut être appliquée récursivement en étendant la requête avec les « Bonnes pages trouvées par l'amont », «Bonnes pages trouvées par l'aval », «Bonnes pages pivot » et «Bonnes pages autorités » qui dans la figure sont encadrés par des rectangles. A chaque récursion, les scores des meilleures pages trouvées deviennent un peu plus faibles (par le fait que les meilleures pages trouvées sont à chaque fois ajoutées dans la requête) et le procédé s'arrête quand les scores cessent d'être suffisants.

Un système mettant en oeuvre le procédé de distillation relative décrit ci-dessus est apte à recevoir une requête de recherche composée d'un ensemble d'URI permettant d'accéder à des ressources d'information telles que des pages Web et fournir en réponse les URI (ou directement les pages) qui sont censés être les plus pertinents par rapport à ladite requête.

La requête peut par exemple être constituée des liens favoris de l'utilisateur, le but du système étant par exemple de surveiller le Web autour de ces liens et de notifier l'utilisateur quand de nouvelles pages intéressantes y apparaissent, soit en technologie « Push » à l'initiative d'un serveur, soit en technologie « Pull » à l'initiative de l'utilisateur.

L'utilisateur peut bien sûr directement fournir au système un ensemble d'URI, néanmoins, d'autres moyens peuvent aussi lui être offerts pour l'assister dans la préparation et la soumission d'une requête de recherche.

Pour déclencher l'exécution d'une requête de recherche à partir d'un lien hypertexte se trouvant dans une page, l'utilisateur peut utiliser l'un quelconque des dispositifs parmi les suivants :

- Un objet graphique activable par exemple par clic (e.g. un bouton) est présenté à proximité de certains liens hypertextes (URI) dans une page Web. Son activation déclenche l'envoi d'une requête de recherche contenant l'URI en question.

- Le système est doté d'un moyen apte à basculer la page dans un état où chaque clic sur un lien déclenche l'exécution d'une requête de recherche (contenant ce lien).

- Une touche du clavier, telle que la touche « Ctrl », appuyée alors que l'on clique (par un moyen de pointage) sert à déclencher l'exécution d'une requête de recherche à partir du lien sur lequel curseur du moyen de pointage est positionné.

- Le bouton droit de la souris (ou équivalent) sert à déclencher l'exécution d'une requête de recherche à partir du lien sur lequel le curseur de la souris est positionné.

- Autre dispositif analogue.

Chacun de ces dispositif peut avantageusement permettre d'exécuter ladite requête de recherche en plus de (en parallèle à) l'accès à la page désignée par le lien en question. Le résultat de la requête de recherche sera par exemple affiché dans une deuxième fenêtre (nouvelle instance du navigateur) ou encore dans une sous-fenêtre du navigateur[55].

[55] De manière analogue à la sous-fenêtre existante aujourd'hui pour les liens favoris, cette sous-fenêtre peut être adjacente à la sous-fenêtre principale dans laquelle était affichée la page contenant le lien que l'utilisateur a cliqué et dans laquelle est ensuite affichée la page accédée par le fait de cliquer sur ce lien.

En supplément du lien sélectionné, d'autres URI peuvent être ajoutés d'office dans la requête de recherche[56]. Ceux-ci peuvent notamment être:

- les liens se trouvant dans la page, dans la région de l'URI sélectionné ;

- les URI précédemment sélectionnés par l'utilisateur pour cette même requête au cours de sa navigation [57] ;

- des liens explicitement prévus et de préférence déterminés par le concepteur de la page pour accompagner l'URI sélectionné ;

- les URI qu'un autre utilisateur (« mentor » ou référent) considère comme étant très pertinents par rapport à l'URI sélectionné, le mentor étant déterminé automatiquement par le système, ou spécifié par l'utilisateur lui-même (choisit dans une liste de « copains » qu'il a au préalable mémorisée dans le système), ou encore proposé par le concepteur de la page (l'utilisateur peut aussi choisir dans une liste d' « experts » proposés par le concepteur de la page).

[56] En effet, un des avantages essentiels du système est de pouvoir fonctionner (trouver les ressources d'information pertinentes) même si la requête de recherche est composée d'une pluralité d'URI.

[57] Les nouveaux URI trouvés par le système sont alors mis en évidence dans le résultat retourné à l'utilisateur (pour les distinguer des URI qui avaient déjà été retournés dans la même navigation).

Préparation d'une requête :

On va maintenant décrire comment l'utilisateur peut préparer une requête composée de plusieurs liens qu'il glane au cours de sa navigation.

a) Affichage de la requête courante en préparation

Au lieu de déclencher directement une requête de recherche, l'action de l'utilisateur (comme décrit plus haut, par exemple le fait de cliquer sur un lien avec le bouton droit et choisir l'option appropriée) déclenche l'affichage d'une page accessoire dans laquelle :

- en plus du lien que l'utilisateur vient de sélectionner[58], d'autres liens, qu'il a le cas échéant précédemment sélectionnés pour cette même requête, sont présentés ;

  ◦ des cases à cocher peuvent être affichées en association avec chaque lien présenté, de manière à ce que l'utilisateur puisse notamment sélectionner ceux qui vont effectivement former la requête;

- ladite page accessoire est aussi munie d'un moyen d'entrée (tel qu'un bouton) permettant de lancer la requête de recherche.

[58] (ainsi que des liens ajoutés d'office, le cas échéant, comme décrit ci-avant)

Ainsi l'utilisateur peut préparer une requête progressivement, en sélectionnant des liens les uns après les autres[59] lors de sa navigation [60] et ensuite envoyer une requête composée de plusieurs URI.

(dans une même page ou dans des pages différentes)

(lors d'une même navigation ou de manière plus espacée dans le temps)

Ladite page accessoire peut en plus contenir des objets graphiques dépliables (comme par exemple des répertoires, casiers, dossiers, ou métaphore analogue) représentant des requêtes en préparation autres que la requête en cours. L'utilisateur peut ainsi choisir la (ou les) requête qui sera enrichie par le nouveau lien qu'il vient de sélectionner.

Suite à la préparation d'une requête à partir d'un URI correspondant à un lien hypertexte dans une page (comme décrit plus haut), les requêtes déjà existantes qui le cas échéant contiennent cet URI lui sont optionnellement présentées.

Avantageusement, ladite page accessoire peut être composée de deux parties. L'une de ces parties contient les éléments décrits ci-dessus (c'est-à-dire les éléments de la requête en préparation). L'autre partie présente le contenu de la page désignée par le lien sélectionné par l'utilisateur.

Par exemple, si l'utilisateur clique sur un lien alors que la page est à l'état où tous les clics déclenchent l'affichage de la requête courante en préparation (ou avec le bouton droit de la souris, etc), le serveur lui retourne ladite page accessoire qui comprend ainsi :

- dans une partie : les éléments de la requête en préparation

- et dans l'autre partie : le contenu de la page désignée par le lien cliqué.

Ainsi, le fait d'utiliser le système représente un avantage important par rapport à la navigation classique sur le Web : l'utilisateur reçoit non seulement la page désignée par le lien qu'il a cliqué (c'est la navigation classique sur le Web), mais en même temps il bénéficie de la possibilité d'envoyer une requête (contenant plusieurs URI) pour obtenir encore d'autres ressources pertinentes en relation avec cette page.

En variante, ladite page accessoire est retournée après une exécution rapide (voire restreinte[61]) de la requête de recherche en cours à laquelle le lien cliqué à été ajouté. La deuxième page contient alors directement une partie du résultat[62]. L'utilisateur reçoit alors non seulement la page désignée par le lien qu'il a cliqué, mais en plus il bénéficie directement d'autres ressources pertinentes en relation avec cette page.

[61] Dans le cas d'une requête sur des pages déjà crawlées, le système peut directement retourner les URI (ou pages) pertinents déjà connus et retourner la suite des résultats en différé.

[62] (par exemple sous forme d'une liste d'URI ou un ensemble de vignettes représentant ces pages en miniature)

Plus avantageusement encore, ladite page accessoire peut être affichée dans une sous-fenêtre[63] adjacente à la sous-fenêtre principale du navigateur. Cette sous-fenêtre adjacente s'ouvre en réponse à l'action de l'utilisateur qui souhaite l'affichage de la requête en préparation (c'est-à-dire ladite page accessoire).[64]

[63] (analogue à la sous-fenêtre des liens favoris des navigateurs actuels)

[64] Noter que, en parallèle à l'affichage de la requête en préparation, le serveur peut avantageusement déjà commencer à arpenter le Web (crawling en terminologie anglo-saxonne) -c'est-à-dire constituer $R^-$, $R^{-+}$, $R^{+-}$, $R^+$, $R^{+-}$ et $R^{+-+}$ comme déjà décrit- autour du lien sélectionné.

La requête en préparation peut ainsi être affichée en parallèle (de manière asynchrone) à l'affichage de la page désignée par le lien clique; cette dernière s'affichant (indépendamment) dans la sous-fenêtre principale.

Le résultat de la requête de recherche peut ensuite être présenté dans la même sous-fenêtre adjacente.

Comme mentionné précédemment, un résultat (partiel) peut éventuellement être retourné après exécution partielle ou restreinte de la requête de recherche en cours, requête à laquelle le lien cliqué a été ajouté. La sous-fenêtre adjacente présente alors directement un résultat rapide de recherche (qui sera éventuellement complété par la suite).

b) Résultat de l'exécution d'une requête de recherche

Pour chaque requête de recherche, le serveur peut retourner les résultats directement (par exemple en retour de la requête HTTP) ou en différé (par exemple par email).

Le serveur retourne les URI (résultant d'une requête) dans une page présentant la même structure que ladite page accessoire (ou ladite requête en préparation), à savoir :

- des cases à cocher sont associées aux liens de manière à ce que l'utilisateur puisse sélectionner ceux qu'il apprécie et supprimer ceux qu'il n'apprécie pas[65]

  ○ chaque URI[66] peut ainsi être dans au moins l'un des états suivants[67] : suggéré (état par défaut), accepté ou supprimé (les URI qui sont à l'état supprimé ne sont pas présentés);

- la page est munie d'un moyen d'entrée (tel qu'un bouton) permettant de relancer la requête de recherche.

[65] (c'est-à-dire demander au système de ne plus les suggérer)

[66] Optionnellement, la présentation du résultat d'une requête de recherche inclut le contenu des pages (pointées par les URI résultants) par exemple sous forme miniaturisée (vignettes).

[67] Accessoirement, une possibilité de copie (« gel ») de page (en local ou dans un espace personnel sur un serveur) peut aussi être offert à l'utilisateur. Chaque lien peut alors être dans un des états suivants : suggéré, accepté, supprimé ou gelé.

La page retournée présente également les autres requêtes (du même utilisateur) sous forme d'objets graphiques dépliables, comme déjà décrit. La présentation de celles-ci peut être hiérarchisée selon leur pertinence par rapport au lien cliqué (selon les procédés de calcul de pertinence décrits plus loin).

La page retournée présente des moyens de commande permettant à l'utilisateur de créer de nouvelles requêtes et supprimer des requêtes existantes. Bien entendu, l'utilisateur peut copier-coller des URI à partir de requêtes existantes ou de n'importe quelle autre ressource. Et lorsque le résultat d'une requête est retourné par le serveur, l'utilisateur peut déplacer (ventiler) les URI reçus dans d'autres requêtes. Chaque requête est accessible individuellement au moyen d'un URI qui lui est propre.

*Maintenance des spots*

On a décrit jusqu'ici plusieurs procédés qui utilisent la méthode de distillation relative, en partant d'une requête (e.g. les liens associés donnés d'un spot) composée d'un ensemble d'URI, pour déterminer et mémoriser des URI pertinents (e.g. les liens associés complétés d'un spot) par rapport à cette requête, avec leurs scores de pertinence. Ces résultats mémorisés sont obtenus sur la base de comptage de liens se trouvant dans les ressources des ensembles $R^{-+}$, $R^{+-}$, $R^{+--}$, $R^{+--}$, $R^{+-+}$, $R^{+-+}$,[68] etc. qui sont eux-mêmes mémorisés du moins en partie. Or ces ensembles varient dans le temps (et les liens se trouvant dans les ressources constituant ces ensembles varient aussi). Il faut donc tenir à jour les données mémorisés et refaire les calculs quand les données qu'ils prennent en entrée varient de manière significative.

[68] $R^{-+}$, $R^{+--}$, et $R^{+-+}$ sont notamment utilisés pour calculer la proximité de ressources liées, et filtrer, comme décrit plus haut, en prenant le complément de cette proximité comme pondération du comptage des liens en question.

Par ailleurs, il est souhaitable de déceler de nouvelles ressources pertinentes avant même que des liens pointant vers elles n'apparaissent sur le Web. On va maintenant décrire un procédé permettant de le faire.

Pour chaque requête (par exemple pour chaque spot),

- sélectionner un premier ensemble de ressources ayant les plus grands scores de pertinence (tels que les plus grands scores pivots) pour ladite requête

- déterminer les *régions pertinentes* (c'est-à-dire les régions possédant des liens vers des ressources dont les scores sont élevés en moyenne) dudit premier ensemble de ressources ayant les plus grands scores de pertinence,

- surveiller les nouveaux liens qui apparaissent dans lesdites régions pertinentes et qui pointent vers de nouvelles ressources (c'est-à-dire vers des ressources qui n'étaient pas encore connues du système),

- sélectionner un deuxième ensemble de ressources ayant un score de pertinence (tel que le score autorité) élevé pour ladite requête,

- sélectionner les nouvelles ressources qui sont les plus similaires aux ressources dudit deuxième ensemble de ressources et donner aux nouvelles ressources sélectionnées un *score autorité dépendant du temps* (comme décrit ci-après) en fonction de leur similarité aux ressources dudit deuxième ensemble de ressources.

La similarité d'une ressource par rapport à d'autres ressources est déterminée en comparant leurs contenus. On décrit ci-après comment déterminer la similarité en fonction de la distribution des mots dans les ressources en question.

Score autorité dépendant du temps :

Chaque nouvelle ressource autorité a un score autorité hypertexte ($a_{ht}$) et un score autorité similarité ($a_s$). Soit $\tau$ le rapport entre

- le temps restant pour que la ressource en question ne soit plus considérée comme étant nouvelle

- et la durée totale de nouveauté (c'est-à-dire la durée totale pendant laquelle une ressource qui vient d'être découverte par le système est considérée comme nouvelle).

$\tau$ est donc un nombre égal à **1** au début de la vie d'une ressource dans le système, et décroît linéairement jusqu'à atteindre **0** au moment où l'on dit que la ressource en question est vieille..

Ainsi $\tau$ est utilisé comme une pondération pour passer progressivement d'un score similarité à un score hypertexte et la formule du score global est $\boxed{a = \tau a_s + \tau' a_{ht}}$ (avec $\tau'$=1-$\tau$).

Comme la distribution des mots d'une nouvelle ressource varie en principe moins que les liens hypertextes qui pointent vers elle, on considère que $a_s$ est constant tandis que $a_{ht}$ doit être mise à jour dans le temps. Ainsi le score $a_s$ doit être calculé au moment où la nouvelle ressource est découverte, et pour toutes les requêtes pour lesquelles elle est dans une région pertinente, jusqu'à qu'elle devienne vieille (ainsi si un lien vers cette ressource apparaît dans une région pertinente après qu'elle soit devenue vieille, alors on ne déterminera pas sa similarité avec les ressources dudit deuxième ensemble).

Similarité :

On va utiliser un algorithme de distillation absolue pour déterminer le score $a_s$ de chaque nouvelle ressource.

Le procédé connu de distillation absolue sur un ensemble de noeuds reliés par des liens (formant ainsi un graphe orienté) comprend les étapes suivantes :

1- à chaque noeud attribuer un score pivot égal à 1 ainsi qu'un score autorité,

2- pour chaque noeud calculer son score autorité en additionnant les scores pivots des noeuds qui pointent vers lui, ensuite normaliser les scores autorités de manière à ce que leur total soit égal à 1,

3- pour chaque noeud calculer son score pivot en additionnant les scores autorités des noeuds vers lesquels il pointe, ensuite normaliser les scores pivots de manière à ce que leur total soit égal à 1,

4- itérer en reprenant à partir de l'étape 2 jusqu'à que l'algorithme converge, c'est-à-dire jusqu'à ce que les scores ne soient plus significativement différents par rapport à l'étape précédente.

Ici les liens sont en plus pondérés par les similarités des ressources en question par rapport à la distribution de leurs mots. Les étapes 2 et 3 sont remplacées par les suivantes :

2'- pour chaque noeud calculer son score autorité en additionnant les scores pivots des noeuds qui pointent vers lui multipliés par le poids des liens respectifs, ensuite normaliser les scores autorités de manière à ce que leur total soit égal à 1,

3'- pour chaque noeud calculer son score pivot en additionnant les scores autorités des noeuds vers lesquels il pointe multipliés par le poids des liens respectifs, ensuite normaliser les scores pivots de manière à ce que leur total soit égal à 1,

Le poids du lien de similarité entre deux ressources est égal au produit scalaire de leurs distributions de mots (c'est-à-dire à la somme, pour chaque mot qui se trouve dans les deux ressources, du produit des fréquences de ce mot dans ces ressources ; la somme résultante est un nombre entre zéro - cas où il n'y a aucun mot en commun - et 1 - cas où les deux ressources on le même contenu) après avoir ôté les mots non significatifs (« stop words » en terminologie anglo-saxonne).

Il est à noter que les liens de similarité ainsi obtenus sont bidirectionnels.

Ainsi, on peut ainsi effectuer la distillation absolue, sur l'ensemble des ressources comprenant :

- la nouvelle ressource découverte,

- et ledit deuxième ensemble de ressources ayant des scores de pertinence élevés,

pour déterminer le score $a_s$ de cette nouvelle ressource découverte.

Les procédés décrits ci-dessus permettent également de sélectionner, parmi un ensemble de ressources supplémentaires, une ressource qui est la plus pertinente par rapport à une ressource de départ.

A cet effet, on met en oeuvre les trois étapes suivantes :

(a) sélection dans le Web de ressources les plus similaires à la ressource de départ (typiquement une ressource privée), par l'une des méthodes de l'invention,

(b) sélection dans le Web de ressources les plus pertinentes par rapport aux ressources sélectionnées à l'étape (a), et

(c) sélection de ressources supplémentaires (typiquement des ressources privées à nouveau) les plus similaires aux ressources les plus pertinentes sélectionnées à l'étape (b).

Un tel procédé permet notamment de générer dynamiquement le contenu de pages Web publiées en fonction du contexte.

## Revendications

1. Procédé de gestion de ressources d'information dans un système informatique comprenant un poste utilisateur doté d'un écran d'affichage, chaque ressource possédant un identifiant (URI) permettant son accès à partir du poste utilisateur, procédé **caractérisé en ce qu'**il comprend les étapes suivantes :

(a) déclaration par l'utilisateur d'une association entre deux ressources, en associant à une deuxième ressource l'identificateur d'une première ressource, et mémorisation de cette association dans une mémoire de gestion associative de ressources ;
(b) identification d'autres ressources pertinentes par rapport à la deuxième ressource par un processus de détermination de pertinence entre ressources reliées entre elles par un graphe de liens, mis en oeuvre par le système informatique et générant des informations de pertinence entre ressources ; et
(c) lors de l'accès à l'une des autres ressources, signalisation de l'existence de la première ressource en présentant ladite première ressource ou en affichant un lien vers celle-ci, en fonction des informations de pertinence et du contenu de la mémoire de gestion associative de ressources.

2. Procédé selon la revendication 1, dans lequel les informations de pertinence sont des scores de pertinence, dans lequel le processus de détermination de pertinence entre ressource identifie un ensemble de ressources pertinentes, et dans lequel l'étape (b) comprend la sélection desdites autres ressources pour la mise en oeuvre de l'étape (c) comme ayant les scores de pertinence les plus élevés dans ledit ensemble.

3. Procédé selon l'une des revendications 1 et 2, dans lequel que l'étape (a) est mise en oeuvre pour une pluralité de deuxièmes ressources appartenant à un groupe, et en ce que l'étape (b) comprend l'identification d'autres ressources pertinentes par rapport à l'ensemble des deuxièmes ressources du groupe.

4. Procédé selon l'une des revendications 1 à 3, dans lequel l'étape (b) est déclenchée par la réalisation de l'étape (a).

5. Procédé selon l'une des revendications 1 à 3, dans lequel l'étape (b) est mise en oeuvre entre l'accès prévu à l'étape (c) pour déterminer si l'autre ressource à laquelle il a été accédé est une autre ressource pertinente par rapport à la deuxième ressource et la signalisation effectuée à ladite étape (c).

6. Procédé selon l'une des revendications 1 à 5, dans lequel l'étape (b) est mise en oeuvre par fourniture d'un identificateur de la ou chaque deuxième ressource à un serveur de détermination de ressources pertinentes.

7. Procédé selon l'une des revendications 1 à 6, dans lequel l'étape (b) est mise en oeuvre par identification d'autres ressources pertinentes par rapport à au moins une ressource intermédiaire (spot) par rapport à laquelle la deuxième ressource est prédéterminée comme étant pertinente.

8. Procédé selon la revendication 7, lequel comprend en outre l'affichage, au voisinage d'une zone d'affichage de ressources, de représentations de liens vers au moins certaines parmi la première ressource, la ou les ressources intermédiaires, et des ressources pertinentes par rapport aux ressources intermédiaires.

9. Procédé selon l'une des revendications 1 à 8, **caractérisé en ce que** l'étape (a) est mise en oeuvre par action à l'aide d'un dispositif d'entrée sur des objets graphiques représentatifs des première et deuxième ressources.

10. Procédé selon la revendication 1, mis en oeuvre dans un environnement de ressources définissant un graphe de liens, dans lequel l'étape (b) est mise en oeuvre à partir d'un ensemble donné de ressources de départ incluant la deuxième ressource, par les étapes suivantes :

b1) identifier un ensemble de ressources citantes constituées par toutes les ressources ayant un lien vers au moins l'une des ressources de départ,
b2) former un ensemble de ressources candidates constitué par l'ensemble des ressources citées par les ressources citantes,
b3) pour chaque ressource candidate, calculer un score de pertinence de ressource candidate entre ladite ressource candidate et l'ensemble de ressources de départ sur la base de l'existence de liens situés dans les ressources citantes et dirigés vers la ressource candidate et vers les ressources de départ, et sur la base également de scores de pertinence de ressources citantes affectés à chacune des ressources citantes,
b4) pour chaque ressource citante, recalculer un score de pertinence de ressource citante sur la base de l'existence, dans la ressource citante en question, de liens vers les ressources candidates et sur la base également des scores de pertinence de ressource candidate attribuées aux ressources candidates à l'étape b3), et
b5) déterminer lesdites ressources additionnelles pertinentes comme étant les ressources candidates qui présentent les meilleurs scores de pertinence de ressource candidate.

11. Procédé selon la revendication 10, **caractérisé en ce que** le calcul de score de pertinence effectué à l'étape b3) comprend le calcul d'une pluralité de sommes de scores de pertinence de ressources citantes, chaque somme comprenant uniquement les scores de pertinences des ressources citantes comprenant un lien vers une ressource donnée constituée par la ressource candidate ou une ressource de départ.

12. Procédé selon la revendication 11, **caractérisé en ce qu'**il comprend également le calcul d'au moins une somme de scores de pertinence de ressources citantes, chaque somme comprenant uniquement les scores de pertinences des ressources citantes comprenant un lien vers l'une parmi un ensemble d'au moins deux ressources données, cet ensemble comprenant la ressource candidate et au moins une ressource de départ.

13. Procédé selon la revendication 1, mis en oeuvre dans un environnement de ressources définissant un graphe de liens, dans lequel l'étape (b) est mise en oeuvre à partir d'un ensemble donné de ressources de départ incluant la deuxième ressource, par les étapes suivantes :

b1) identifier un ensemble de ressources citées constituées par toutes les ressources ayant un lien depuis au moins l'une des ressources de départ,
b2) former un ensemble de ressources candidates constitué par l'ensemble des ressources citant les ressources citées,
b3) pour chaque ressource candidate, calculer un score de pertinence de ressource candidate entre ladite ressource candidate et l'ensemble de ressources de départ sur la base de l'existence de liens situés dans la ressource candidate et dans les ressources de départ et dirigés vers les ressources citées, et sur la base également de scores de pertinence de ressources citées affectés à chacune des ressources citées,
b4) pour chaque ressource citée, recalculer un score de pertinence de ressource citée sur la base de l'existence, dans la ressource citée en question, de liens depuis les ressources candidates et sur la base également des scores de pertinence de ressource candidate attribuées aux ressources candidates à l'étape b3), et
b5) déterminer lesdites ressources additionnelles pertinentes comme étant les ressources candidates qui présentent les meilleurs scores de pertinence de ressource candidate.

14. Procédé selon la revendication 1, mis en oeuvre dans un système informatique pourvu d'un écran d'affichage et d'un dispositif d'entrée pour déplacement et actionnement de curseur tel qu'une souris, et où chaque ressource possède une représentation affichée sur l'écran de manière à pouvoir être déplacée à l'aide du dispositif d'entrée, dans lequel l'étape a) comprend les sous-étapes suivantes :

a1) déplacement de la représentation de la première ressource pour l'amener au-dessus de la représentation de la seconde ressource, puis
a2) mémorisation, dans la mémoire de gestion associative de ressources, d'informations d'association entre les première et deuxième ressources.

15. Procédé selon la revendication 14, dans lequel l'étape de déplacement est effectuée par une technique de glisser-déposer.

16. Procédé selon l'une des revendications 14 et 15, dans lequel les ressources comprennent des fichiers.

17. Procédé selon l'une des revendications 14 à 16, dans lequel les ressources comprennent des ressources accessibles par un réseau tel que l'Internet.

18. Procédé selon l'une des revendications 1 à 17, dans lequel, dans le cas où une lecture de la mémoire de gestion associative détermine l'existence de plusieurs premières ressources qui ont été associées à plusieurs deuxièmes ressources respectives et devant être signalées lors de l'accès à une autre ressource, l'étape de signalisation comprend la signalisation ordonnée d'au moins une partie desdites plusieurs premières ressources.

19. Procédé selon la revendication 18, **caractérisé en ce que** la signalisation ordonnée est basée sur la détermination de scores de pertinence entre l'autre ressource et lesdites plusieurs deuxièmes ressources.

20. Procédé selon l'une des revendications 14 à 19, dans lequel la mémoire de gestion associative de ressources est contenue dans un serveur accessible à partir d'une pluralité de postes individuels dans lesquels l'étape de déplacement peut être mise en oeuvre.

21. Procédé selon la revendication 20, **caractérisé en ce que** les associations entre ressources sont mémorisées utilisateur par utilisateur.

22. Procédé selon la revendication 20, **caractérisé en ce que** les associations entre ressources sont mémorisées de façon mutualisée entre plusieurs utilisateurs.


**Patentansprüche**

1. Verfahren zur Verwaltung von Informationsquellen in einem Datenverarbeitungssystem, das ein Benutzerendgerät mit einem Anzeigebildschirm umfasst, wobei jede Quelle eine Kennung (URI) aufweist, die den Zugriff darauf vom Benutzerendgerät ermöglicht, Verfahren, **dadurch gekennzeichnet, dass** es die folgenden Schritte umfasst:

   (a) Anmeldung einer Verknüpfung zwischen zwei Quellen durch den Benutzer, indem die Kennung einer ersten Quelle mit einer zweiten Quelle verknüpft wird, und Speicherung dieser Verknüpfung in einem Quellenverknüpfungsverwaltungsspeicher;
   (b) Auffinden anderer in Bezug auf die zweite Quelle relevanter Quellen durch ein Verfahren zur Bestimmung der Relevanz von durch einen Verknüpfungsgraphen miteinander verbundenen Quellen, das vom Datenverarbeitungssystem ausgeführt wird und Relevanzinformationen über Quellen erzeugt; und
   (c) beim Zugriff auf eine der anderen Quellen, Meldung der Existenz der ersten Quelle durch Angabe der genannten ersten Quelle oder Anzeige einer Verknüpfung zu dieser, in Abhängigkeit von den Relevanzinformationen und dem Inhalt des Speichers zur assoziativen Quellenverwaltung.

2. Verfahren nach Patentanspruch 1, in dem die Relevanzinformationen Relevanzraten sind, in dem der Vorgang der Bestimmung der Relevanz von Quellen eine Gruppe relevanter Quellen identifiziert und in dem der Schritt (b) die Auswahl der genannten anderen Quellen zur Ausführung von Schritt (c) als denjenigen Quellen, die die höchsten Relevanzraten in der genannten Gruppe haben, umfasst.

3. Verfahren nach einem der Patentansprüche 1 und 2, in dem nur der Schritt (a) für mehrere zweite Quellen, die zu einer Gruppe gehören, ausgeführt wird und dadurch, dass der Schritt (b) die Identifizierung anderer, in Bezug auf die Gesamtheit der zweiten Quellen der Gruppe relevanter Quellen umfasst.

4. Verfahren nach einem der Patentansprüche 1 bis 3, in dem der Schritt (b) von der Ausführung des Schrittes (a) ausgelöst wird.

5. Verfahren nach einem der Patentansprüche 1 bis 3, in dem der Schritt (b) zwischen dem in Schritt (c) vorgesehenen Zugriff zur Bestimmung, ob die andere Quelle, auf die zugegriffen wurde, eine andere in Bezug auf die zweite Quelle relevante Quelle ist, und der im genannten Schritt (c) erfolgten Meldung ausgeführt wird.

6. Verfahren nach einem der Patentansprüche 1 bis 5, in dem der Schritt (b) als Ausgabe einer Kennung der oder jeder zweiten Quelle an einen Server zur Bestimmung relevanter Quellen ausgeführt wird.

7. Verfahren nach einem der Patentansprüche 1 bis 6, in dem der Schritt (b) als Identifizierung anderer, in Bezug auf mindestens eine Mittelquelle (spot), in Bezug auf die die zweite Quelle vorab als relevant bestimmt wurde, relevanter Quellen ausgeführt wird.

8. Verfahren nach Patentanspruch 7, das außerdem in der Nachbarschaft eines Bereichs zur Quellenanzeige die Anzeige von Stellvertretern von Verknüpfungen zu mindestens bestimmten unter der ersten Quelle, der oder den Mittelquellen und in Bezug auf die Mittelquellen relevanten Quellen umfasst.

9. Verfahren nach einem der Patentansprüche 1 bis 8, **dadurch gekennzeichnet, dass** der Schritt (a) als Einwirkung auf graphische Objekte, die die erste und zweite Quelle vertreten, mit Hilfe einer Eingabevorrichtung ausgeführt wird.

10. Verfahren nach Patentanspruch 1, ausgeführt in einer Umgebung von Quellen, die einen Verknüpfungsgraphen definiert, in dem der Schritt (b) von einer gegebenen Gruppe von Ausgangsquellen, die die zweite Quelle enthält, ausgehend durch die folgenden Schritte ausgeführt wird:

   b1) Identifikation einer Gruppe zitierender Quellen, bestehend aus allen Quellen, die eine Verknüpfung zu mindestens einer der Ausgangsquellen haben,
   b2) Aufstellen einer Gruppe von Kandidatenquellen, bestehend aus der Gesamtheit der von den zitierenden Quellen zitierten Quellen,
   b3) Berechnung einer Kandidatenquellen-Relevanzrate der genannten Kandidatenquelle in Bezug auf die Gesamtheit der Ausgangsquellen für jede Kandidatenquelle aufgrund der Existenz von Verknüpfungen, die sich in den zitierenden Quellen befinden und auf die Kandidatenquelle und die Ausgangsquellen gerichtet sind und ebenso aufgrund der Relevanzraten zitierender Quellen, die jeder zitierenden Quelle zugeordnet sind,
   b4) erneute Berechnung einer Relevanzrate zitierender Quellen für jede zitierende Quelle aufgrund der Existenz in der fraglichen zitierenden Quelle von Verknüpfungen zu den Kandidatenquellen, und ebenso aufgrund der Kandidatenquellen-Relevanzraten, die im Schritt b3) den Kandidatenquellen zugeordnet wurden, und
   b5) Bestimmung der genannten zusätzlichen relevanten Quellen als solchen Kandidatenquellen, die die besten Kandidatenquellen-Relevanzraten aufweisen.

11. Verfahren nach Patentanspruch 10, **dadurch gekennzeichnet, dass** die im Schritt b3) erfolgende Berechung von Relevanzraten die Berechnung mehrerer Summen der Relevanzraten zitierender Quellen umfasst, wobei jede Summe nur die Relevanzraten der zitierenden Quellen umfasst, die eine Verknüpfung zu einer gegebenen Quelle enthalten, die die Kandidatenquelle sein kann oder eine Ausgangsquelle.

12. Verfahren nach Patentanspruch 11, **dadurch gekennzeichnet, dass** es ebenso die Berechnung mindestens einer Summe von Relevanzraten zitierender Quellen umfasst, wobei jede Summe nur die Relevanzraten der zitierenden Quellen umfasst, die eine Verknüpfung zu einer Quelle in einer Gruppe mindestens zweier gegebener Quellen enthält, wobei diese Gruppe die Kandidatenquelle umfasst und mindestens eine Ausgangsquelle.

13. Verfahren nach Patentanspruch 1, ausgeführt in einer Umgebung von Quellen, die einen Verknüpfungsgraphen definiert, in dem der Schritt (b) von einer gegebenen Gruppe von Ausgangsquellen, die die zweite Quelle enthält, ausgehend durch die folgenden Schritte ausgeführt wird:

   b1) Identifikation einer Gruppe zitierter Quellen, bestehend aus allen Quellen, die eine Verknüpfung ausgehend von mindestens einer der Ausgangsquellen haben,
   b2) Aufstellen einer Gruppe von Kandidatenquellen, bestehend aus der Gesamtheit der die zitierten Quellen zitierenden Quellen,
   b3) Berechnung einer Kandidatenquellen-Relevanzrate der genannten Kandidatenquelle in Bezug auf die Gesamtheit der Ausgangsquellen für jede Kandidatenquelle aufgrund der Existenz von Verknüpfungen, die sich in der Kandidatenquelle und in den Ausgangsquellen befinden und auf die zitierten Quellen gerichtet sind, und ebenso aufgrund der Relevanzraten zitierter Quellen, die jeder zitierten Quelle zugeordnet sind,
   b4) erneute Berechnung einer Relevanzrate zitierter Quellen für jede zitierte Quelle aufgrund der Existenz in der fraglichen zitierten Quelle von Verknüpfungen ausgehend von den Kandidatenquellen, und ebenso aufgrund der Kandidatenquellen-Relevanzraten, die im Schritt b3) den Kandidatenquellen zugeordnet wurden, und

b5) Bestimmung der genannten zusätzlichen relevanten Quellen als solchen Kandidatenquellen, die die besten Kandidatenquellen-Relevanzraten aufweisen.

14. Verfahren nach Patentanspruch 1, implementiert in einem Datenverarbeitungssystem, das einen Anzeigebildschirm und eine Eingabevorrichtung zur Verschiebung und Betätigung eines Cursors, wie etwa eine Maus, umfasst und in dem jede Quelle einen auf dem Bildschirm angezeigten Stellvertreter aufweist, derart, dass sie mit Hilfe der Eingabevorrichtung verschoben werden kann, in dem der Schritt a) die folgenden Unterschritte umfasst:

a1) Verschiebung des Stellvertreters der ersten Quelle, um ihn über den Stellvertreter der zweiten Quelle zu bringen, und dann

a2) Speicherung von Verknüpfungsinformationen der ersten und der zweiten Quelle miteinander im Quellenverknüpfungsverwaltungsspeicher.

15. Verfahren nach Patentanspruch 14, in dem der Schritt der Verschiebung durch eine Drag-and-Drop-Technik (durch Ziehen und Ablegen) erfolgt.

16. Verfahren nach Patentanspruch 14 und 15, in dem die Quellen Dateien umfassen.

17. Verfahren nach einem der Patentansprüche 14 bis 16, in dem die Quellen Dateien umfassen, die über ein Netzwerk, wie das Internet, zugänglich sind.

18. Verfahren nach einem der Patentansprüche 1 bis 17, in dem in dem Fall, wo ein Lesezugriff auf den Verknüpfungsverwaltungsspeicher die Existenz mehrerer erster Quellen bestimmt, die jeweils mit mehreren zweiten Quellen verknüpft worden sind und die beim Zugriff auf eine andere Quelle gemeldet werden müssen, wobei der Meldeschritt die geordnete Meldung mindestens eines Teils der genannten mehreren ersten Quellen umfasst.

19. Verfahren nach Patentanspruch 18, **dadurch gekennzeichnet, dass** das geordnete Melden auf der Bestimmung von Relevanzraten der anderen Quelle in Bezug auf die genannten mehreren zweiten Quellen beruht.

20. Verfahren nach einem der Patentansprüche 14 bis 19, in dem der Quellenverknüpfungsverwaltungsspeicher in einem Server enthalten ist, der von einer Vielzahl einzelner Stellen zugänglich ist, in denen der Schritt des Verschiebens implementiert sein kann.

21. Verfahren nach Patentanspruch 20, **dadurch gekennzeichnet, dass** die Verknüpfungen zwischen Quellen für jeden Benutzer getrennt gespeichert werden.

22. Verfahren nach Patentanspruch 20, **dadurch gekennzeichnet, dass** die Verknüpfungen zwischen Quellen für mehrere Benutzer gemeinsam gespeichert werden.

**Claims**

1. A method of managing information resources in a computer system comprising a user station provided with a display screen, each resource having an identifier (URI) allowing its access from the user station, the method being **characterized in that** it comprises the following steps:

a) declaration by the user of an association between two resources, by associating with a second resource the identifier of a first resource, and storage of this association in a resource association management memory;

b) identification of other resources relevant with respect to the second resource by means of a process for determination of relevance between resources linked together by a link graph, implemented by the computer system and generating information of relevance between resources; and

c) when one of the other resources is accessed, signalization of the existence of the first resource by presenting said first resource or by displaying a link toward it, depending on the relevance information and on the content of the resource association management memory.

2. A method according to claim 1, wherein the relevance information are relevance scores, wherein process for determination of relevance between resources identifies a set of relevant resources, and wherein step (b) comprises the selection of said other resources for the performance of step (c) as having the highest relevance scores in said set.

3. A method according to claim 1 or 2, wherein step (a) is implemented for a plurality of second resources belonging to a group, and step (b) comprises the identification of other resources relevant with respect to the set of second resources of the group.

4. A method according to one of claims 1 to 3, wherein step (b) is triggered by the performance of step (a).

5. A method according to one of claims 1 to 3, wherein step (b) is performed between the access provided in step (c) for determine whether the other resource which has been accessed is another relevant resource with respect to the second resource and the signalization performed in said step (c).

6. A method according to one of claims 1 to 5, wherein step (b) is performed by providing an identifier of the or each second resource to a server for determining relevant resources.

7. A method according to one of claims 1 to 6, wherein step (b) is performed by identifying other resources relevant with respect to at least one intermediate resource (spot) with respect to which the second resource is predetermined as being relevant.

8. A method according to claim 7, further comprising the displaying, in the vicinity of a resource displaying area, of representations of links towards at least certain among the first resource, the intermediate resource(s), and resources which are relevant with respect to the intermediate resources.

9. A method according to one of claims 1 to 8, wherein step (a) is performed by action by means of an input device on graphical objects representative of the first and second resources.

10. A method according to claim 1, performed in an environment of resources defining a link graph, wherein step (b) is performed from a given set of starting resources including the second resource, by the following steps:

   b1) identifying a set of citing resources made of all the resources having a link toward at least one of the starting resources,
   b2) forming a set of candidate resources made of the set of resources cited by the citing resources,
   b3) for each candidate resource, computing a candidate resource relevance score between said candidate resource and the set of starting resources on the basis of the existence of links contained in the citing resources and directed toward the candidate resource and toward the starting resources, and on the basis also of citing resource relevance scores of assigned to each of the citing resources,
   b4) for each citing resource, recomputing a citing resource relevance score on the basis of the existence, in the citing resource at stake, of links toward the candidate resources and on the basis also of the candidate resource relevance scores assigned to the candidate resources in step b3), and
   b5) determining said additional relevant resources as being the candidate resources which exhibit the best candidate resource relevance scores.

11. A method according to claim 10, **characterized in that** the relevance score computation performed in step b3) comprises the computation of a plurality of sums of citing resource relevance scores, each sum comprising only the relevance scores of the citing resources which contain a link toward a given resource made of the candidate resource or a starting resource.

12. A method according to claim 11, **characterized in that** it further comprises the computation of at least one sum of citing resource relevance scores, each sum comprising only the relevance scores of the citing resources which contain a link toward one among a set of at least two given resources, this set comprising the candidate resource and at least one starting resource.

13. A method according to claim 1, performed in an environment of resources defining a link graph, in which step (b) is performed from a given set of starting resources including said second resource, by the following steps:

   b1) identifying a set of cited resources made of all the resources having a link from at least one of the starting resources,

b2) forming a set of candidate resources that consists of the set of resources citing the cited resources,

b3) for each candidate resource, computing a candidate resource relevance score between said candidate resource and the set of starting resources on the basis of the existence of links contained in the candidate resource and in the starting resources and directed toward the cited resources, and on the basis also of cited resource relevance scores assigned to each of the cited resources,

b4) for each cited resource, recomputing a cited resource relevance score on the basis of the existence, in the cited resource at stake, of links from the candidate resources and on the basis also of the candidate resource relevance scores assigned to the candidate resources in step b3),

b5) determining said additional relevant resources as being the candidate resources which exhibit the best candidate resource relevance scores.

14. A method according to claim 1, performed in a computer system provided with a display screen and with an input device for cursor movement and actuation such as a mouse, and wherein each resource has a representation displayed on the screen so as to be displaceable by means of the input device, wherein step (a) comprises the following sub-steps:

a1) displacement of the representation of the first resource to bring it above the representation of the second resource, and then

a2) storage, in the resource association management memory, of association information between the first and second resources.

15. A method according to claim 14, wherein the displacement step is performed by a drag-and-drop technique.

16. A method according to claim 14 or 15, wherein the resources comprise files.

17. A method according to one of claims 14 to 16, wherein the resources comprise resources accessible via a network such as the Internet.

18. A method according to one of claims 1 to 17, wherein, in the case where a reading of the association management memory determines the existence of a plurality of first resources which have been associated to a plurality of respective second resources and which have to be signaled when another resource is accessed, the signaling step comprises the ordered signaling of at least part of said plural first resources.

19. A method according to claim 18, wherein the ordered signaling is based on the determination of relevance scores between the other resource and said plural second resources.

20. A method according to one of claims 14 to 19, wherein the resource association management memory is contained in a server accessible from a plurality of individual stations in which the displacement step can be performed.

21. A method according to claim 20, **characterized in that** the associations between resources are stored user by user.

22. A method according to claim 20, **characterized in that** the associations between resources are stored in a mutualized manner between a plurality of users.

Fig. 1

Fig. 2

D  (1)

URS.com/default.html                  c1.com/main.html

URS                    (D)

<ERASE>
-----
-----
-----
-----
c1.com/main.html

CLI.com/index.html ?partie=1
(REFERER= c1.com/main.html)

(1)

**Fig. 3**

URS.com/default.html ?ID=12345      CLI.com/main.html

D    (1)

URS                    (D)

<ERASE>
-----
-----
-----
-----
c1.com/main.html
CLI.com/main.html

(1)

**Fig. 4**

**Fig. 5**

Le poids du lien

$$\mathbf{L}_{ij} = \overline{x_{ij}} \text{ , tronqué}$$

supérieurement à 1

**Fig. 6**

Bonnes pages trouvées
par l'amont

R

Bonnes pages hub →

← Bonnes pages autorité

Bonnes pages
trouvées par l'aval

**Fig. 7**

EP 1 470 501 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DEAN J. et al.** Finding relates pages in the World Wide Web. *Computer Networks,* 17 Mai 1999, vol. 31 (11 - 16), 1467-1479

- **PIROLLI P et al.** Silk from a Sow's Ear: Extracting Usable Structures from the WEB. *CHI '96 Conference on Human Factors in' Computing Systems, Vancouver,* 13 Avril 1996, 118-125